# EUROPEAN PATENT APPLICATION

(11) **EP 4 439 170 A1**
(43) Date of publication of application: **02.10.2024**
(21) Application number: 22898970.3
(22) Date of filing: 21.11.2022
(51) Int. Cl.: G03B 5/04, G03B 17/12, H04N 23/00, H02K 33/18

(54) **CAMERA ACTUATOR, LENS TRANSFER DEVICE, AND CAMERA DEVICE COMPRISING SAME**

(30) Priority: 24.11.2021 KR 20210163330
(71) Applicant: LG INNOTEK CO., LTD., Seoul 07796 (KR)
(72) Inventor: LEE, Jun Taek, Seoul 07796 (KR)
(74) Representative: Plasseraud IP
(86) International application number: PCT/KR2022/018416
(87) International publication number: WO 2023/096288

(57) **Abstract**

Embodiments of the present disclosure disclose a camera device including a housing, a first lens assembly moving in an optical axis direction with respect to the housing, and a first driving unit configured to move the first lens assembly, wherein the first driving unit includes a first driving coil and a first driving magnet facing the first driving coil, the first driving coil includes a first sub-coil and a second sub-coil disposed to overlap each other in the optical axis direction, and a maximum moving distance of the first lens assembly in the optical axis direction is greater than a length of a hollow of the first sub-coil in a short axis direction and smaller than or equal to a length of the hollow of the first sub-coil in the optical axis direction.

## Description

### [Technical Field]

The present disclosure relates to a camera actuator and a camera device including the same.

### [Background Art]

A camera is a device for taking pictures or videos of subjects and is mounted on a portable device, a drone, a vehicle, or the like. A camera module may have an image stabilization (IS) function of correcting or preventing the image shake caused by the movement of a user in order to improve the quality of the image, an auto focusing (AF) function of aligning a focal length of a lens by automatically adjusting an interval between an image sensor and the lens, and a zooming function of capturing a remote subject by increasing or decreasing the magnification of the remote subject through a zoom lens.

Meanwhile, a pixel density of the image sensor increases as a resolution of the camera increases, and thus a size of the pixel becomes smaller, and as the pixel becomes smaller, the amount of light received for the same time decreases. Therefore, as the camera has a higher pixel density, the image shake caused by hand shaking due to a shutter speed decreased in a dark environment may more severely occur. As a representative IS technique, there is an optical image stabilizer (OIS) technique of correcting motion by changing a path of light.

According to the general OIS technique, the motion of the camera may be detected through a gyro sensor or the like, and a lens may tilt or move, or a camera module including a lens and an image sensor may tilt or move based on the detected motion. When the lens or the camera module including the lens and the image sensor tilts or moves for an OIS, it is necessary to additionally secure a space for tilting or moving around the lens or the camera module.

Meanwhile, an actuator for OIS may be disposed around the lens. In this case, the actuator for OIS may include actuators in charge of two axes (i.e., an X-axis and a Y-axis perpendicular to a Z-axis which is an optical axis) tiling.

However, according to the needs of ultra-slim and ultra-small camera devices, there is a large space constraint for arranging the actuator for OIS, and it may be difficult to secure a sufficient space where the lens or the camera device including the lens and the image sensor itself may be tilted or moved for OIS. In addition, as the camera has a higher pixel density, it is preferable that a size of the lens be increased to increase the amount of received light, and there may be a limit to increasing the size of the lens due to a space occupied by the actuator for OIS.

In addition, when a zooming function, an AF function, and an OIS function are all included in the camera device, there is also a problem that an OIS magnet and an AF or zoom magnet are disposed close to each other to cause magnetic field interference.

### [Disclosure]

### [Technical Problem]

The present disclosure is directed to providing a camera actuator having a driving unit for providing a long stroke (long moving distance) when auto focusing (AF) and zooming functions are performed.

In addition, the present disclosure may implement a camera actuator and a camera device for increasing a moving distance of a lens assembly using the number of driving coils.

In addition, the present disclosure may provide a camera actuator and a camera device for more accurately detecting an increased moving distance by improving positional linearity through connection of a plurality of Hall sensors.

In addition, the present disclosure may provide a camera actuator and a camera device with improved design easiness and reduced manufacturing cost through connection of a plurality of Hall sensors.

According to the present disclosure, it is possible to implement a camera actuator and a camera device with a reduced weight by reducing a size of a driving magnet.

An object of the embodiment is not limited thereto and will also include objects or effects which may be identified from configurations or embodiments.

### [Technical Solution]

A camera device according to an embodiment of the present disclosure includes a housing, a first lens assembly moving in an optical axis direction with respect to the housing, and a first driving unit configured to move the first lens assembly, wherein the first driving unit includes a first driving coil and a first driving magnet facing the first driving coil, the first driving coil includes a first sub-coil and a second sub-coil disposed to overlap each other in the optical axis direction, and a maximum moving distance of the first lens assembly in the optical axis direction is greater than a length of a hollow of the first sub-coil in a short axis direction and smaller than or equal to a length of the hollow of the first sub-coil in the optical axis direction.

A maximum length of the first sub-coil in the optical axis direction may be greater than a length of the first driving magnet in the optical axis direction.

The length of the first driving magnet in the optical axis direction may be greater than the maximum moving distance of the first lens assembly.

The first driving magnet may be moved within a range from one side of the hollow of the first sub-coil to the other side of a hollow of the second sub-coil in the optical axis direction.

The camera device may include a second lens assembly configured to move in the optical axis direction and a second driving unit configured to move the second lens assembly, wherein the second driving unit may include a second driving coil and a second driving magnet facing the second driving coil, and the second driving coil may include a third sub-coil and a fourth sub-coil disposed to overlap each other in the optical axis direction.

The camera device may include an image sensor, wherein the second lens assembly may be disposed closer to the image sensor than the first lens assembly, and a moving distance of the second lens assembly in the optical axis direction may be greater than a moving distance of the first lens assembly in the optical axis direction.

Currents may flow in the first sub-coil and the second sub-coil in difference directions.

The camera device may include a yoke disposed on a side surface of the first lens assembly, wherein the yoke may surround at least a portion of a side surface of the first driving magnet.

The camera device may include three or more Hall sensors disposed in at least one of the first sub-coil and the second sub-coil.

The three or more Hall sensors may include a unit of two Hall sensors connected in series, and at least one unit of Hall sensors and another one Hall sensor may be connected in parallel.

The camera device may include a plurality of first guide grooves positioned outside the first lens assembly and a plurality of balls disposed in one of the plurality of first guide grooves, wherein the plurality of balls may include balls having different diameters.

Among the plurality of balls, a diameter of a ball positioned at an outer side is greater than a diameter of a ball positioned inside.

A polarity of a face of the first driving magnet facing the first driving coil may be the same as a polarity of the second driving magnet facing the second driving coil.

Any one of the hollow of the first sub-coil and a hollow of the second sub-coil may have a lateral length in the optical axis direction greater than a length in a direction perpendicular to the optical axis direction.

A length of the first driving magnet in the optical axis direction may be greater than a length of any one of the hollow of the first sub-coil and the hollow of the second sub-coil in the optical axis direction.

The length of the first driving magnet in the optical axis direction may be smaller than a distance from one side of the hollow of the first sub-coil to the other side of a hollow of the second sub-coil.

The length of the first driving magnet in the optical axis direction may be smaller than a distance from the one side of the hollow of the first sub-coil to one side of the hollow of the second sub-coil.

The length of the first driving magnet in the optical axis direction may be smaller than a distance from the other side of the hollow of the first sub-coil to the other side of the hollow of the second sub-coil.

A maximum width of the first driving magnet in the short axis direction may be smaller than a maximum width of the first sub-coil in the short axis direction.

The first sub-coil and the second sub-coil may be connected in parallel.

A camera device according to an embodiment includes a housing, a lens assembly configured to move in an optical axis direction with respect to the housing, a first driving magnet disposed in the lens assembly, and a first driving coil facing the first driving magnet, wherein the first driving coil includes a first sub-coil and a second sub-coil disposed to overlap each other in the optical axis direction, and current directions of a first region of the first sub-coil overlapping the first driving magnet in a direction perpendicular to the optical axis direction and disposed perpendicular to the optical axis direction and a second region of the second sub-coil are the same.

A camera device according to an embodiment includes a fixed unit including a first sub-coil and a second sub-coil disposed to overlap each other in an optical axis direction and a moving unit including a first driving magnet and configured to move in the optical axis direction, wherein a moving distance of the moving unit in the optical axis direction is greater than a length of a hollow of the first sub-coil in a short axis direction and smaller than or equal to a length of the hollow of the first sub-coil in a long axis direction, current directions of a first region of the first sub-coil overlapping the first driving magnet in a direction perpendicular to the optical axis direction and disposed in the short axis direction and a second region of the second sub-coil are the same, and a maximum length of the first driving magnet in the optical axis direction is smaller than a maximum length of the first sub-coil.

### [ADVANTAGEOUS EFFECTS]

According to the present disclosure, it is possible to implement a camera actuator having a driving unit for providing a long stroke (long moving distance) when AF and zooming functions are performed.

In addition, the present disclosure can implement a camera actuator and a camera device for increasing a moving distance of a lens assembly using the number of driving coils.

In addition, according to the present disclosure, it is possible to implement a camera actuator and a camera device for more accurately detecting an increased moving distance by improving positional linearity through connection of a plurality of Hall sensors.

In addition, according to the present disclosure, it is possible to implement a camera actuator and a camera device with improved design easiness and reduced manufacturing cost through connection of a plurality of Hall sensors.

According to the present disclosure, it is possible to implement a camera actuator and a camera device with a reduced weight by reducing a size of a driving magnet.

According to the present disclosure, it is possible to implement a camera actuator and a camera device applicable to ultra-slim, ultra-small, and high-resolution cameras.

Various and beneficial advantages and effects of the present disclosure are not limited to the above-described contents and will be more easily understood in the above process of describing specific embodiments of the present disclosure.

### [Description of Drawings]

FIG. 1 is a perspective view of a camera device according to an embodiment;
FIG. 2 is an exploded perspective view of the camera device according to the embodiment;
FIG. 3 is a cross-sectional view along line A-A' in FIG. 1;
FIG. 4 is an exploded perspective view of a first camera actuator according to an embodiment;
FIG. 5 is a perspective view of the first camera actuator according to the embodiment from which a first shield can and a board are removed;
FIG. 6A is a cross-sectional view along line B-B' in FIG. 5;
FIG. 6B is a cross-sectional view along line C-C' in FIG. 5;
FIG. 7A is an exploded perspective view of a first camera actuator according to another embodiment;
FIG. 7B is a cross-sectional view of the first camera actuator according to another embodiment;
FIG. 7C is another cross-sectional view of the first camera actuator according to another embodiment;
FIG. 8 is a perspective view of a second camera actuator according to the embodiment;
FIG. 9 is an exploded perspective view of the second camera actuator according to the embodiment;
FIG. 10 is a cross-sectional view along line D-D' in FIG. 8;
FIGS. 11 and 12 are views for describing the driving of each lens assembly according to an embodiment;
FIG. 13 is a view showing the driving of the second camera actuator according to an embodiment;
FIG. 14 is a schematic diagram showing a circuit board according to an embodiment;
FIG. 15 is a perspective view of some components of the second camera actuator according to the embodiment;
FIG. 16 is a view showing a second optical driving coil, a second optical driving magnet, and a yoke according to an embodiment;
FIG. 17 is a view describing the movement of the second optical driving magnet by a second driving unit according to an embodiment;
FIG. 18 is a view showing the movement of second and third lens assemblies according to an embodiment;
FIG. 19 is a block diagram showing a configuration of a camera device according to an embodiment of the present disclosure;
FIG. 20 is a block diagram showing a detailed configuration of a position sensor unit in FIG. 12;
FIG. 21 is a view for describing a connection relationship of sensors according to an embodiment of the present disclosure;
FIG. 22 is a view for describing a connection relationship of sensors according to another embodiment of the present disclosure;
FIG. 23 is a configuration diagram of a sensor, a driver, a driving coil, and a driving magnet according to an embodiment;
FIG. 24 is a perspective view showing a circuit connection according to an embodiment;
FIG. 25 is a perspective view of a mobile terminal to which the camera device according to the embodiment is applied; and
FIG. 26 is a perspective view of a vehicle to which the camera device according to the embodiment is applied.

### [Modes of the Invention]

Since the present disclosure may have various changes and various embodiments, specific embodiments are illustrated and described in the accompanying drawings. However, it should be
understood that it is not intended to limit specific embodiments, and it should be understood to include all modifications, equivalents, and substitutes included in the spirit and scope of the present disclosure.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present disclosure. The term "and/or" includes a combination of a plurality of related listed items or any of the plurality of related listed items.

When a certain component is described as being "connected" or "coupled" to another component, it is understood that it may be directly connected or coupled to another component or other components may also be disposed therebetween. On the other hand, when a certain component is described as being "directly connected" or "directly coupled" to another component, it should be understood that other components are not disposed therebetween.

The terms used in the application are only used to describe specific embodiments and are not intended to limit the present disclosure. The singular expression includes the plural expression unless the context clearly dictates otherwise. In the application, it should be understood that terms such as "comprise" or "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those of ordinary skill in the art to which the present disclosure pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are given the same reference numerals regardless of the reference numerals, and overlapping descriptions thereof will be omitted.

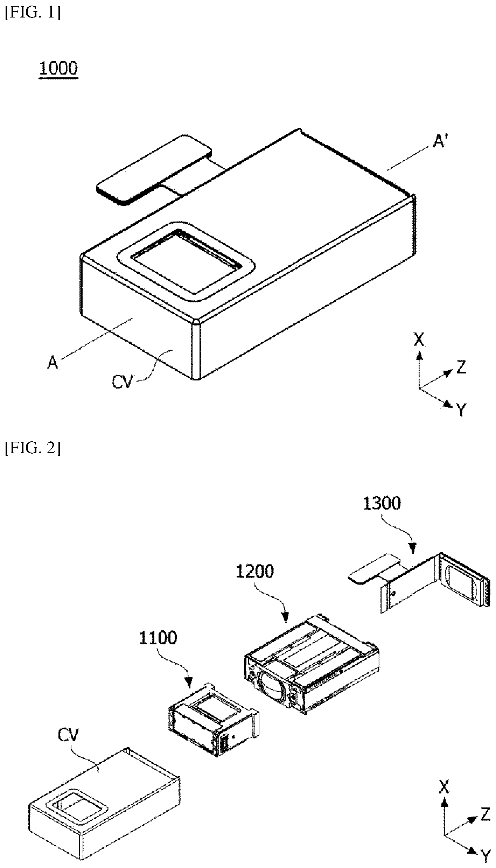

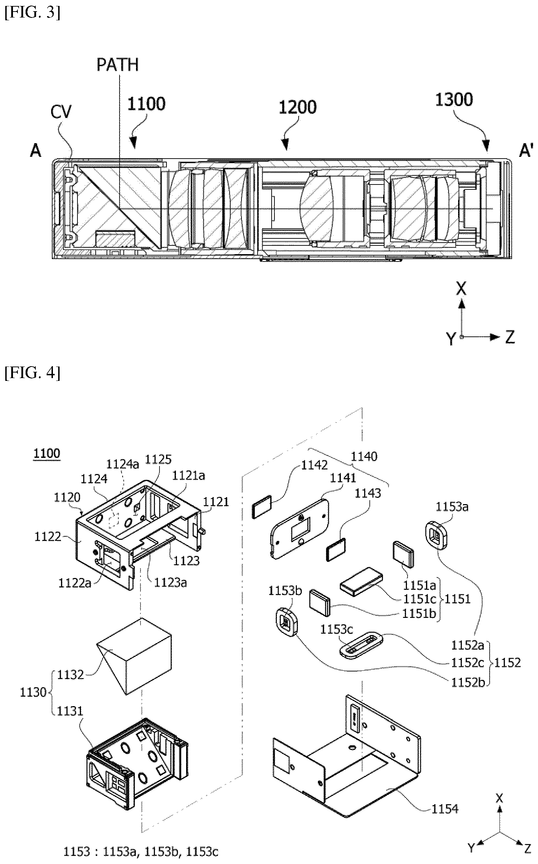

FIG. 1 is a perspective view of a camera device according to an embodiment, FIG. 2 is an exploded perspective view of the camera device according to the embodiment, and FIG. 3 is a cross-sectional view along line A-A' in FIG. 1.

Referring to FIGS. 1 and 2, a camera device 1000 according to the embodiment may include a cover CV, a first camera actuator 1100, a second camera actuator 1200, and a circuit board 1300. Here, the first camera actuator 1100 may be used interchangeably with "first actuator," and the second camera actuator 1200 may be used interchangeably with "second actuator."

The cover CV may cover the first camera actuator 1100 and/or the second camera actuator 1200. It is possible to increase a coupling force between the first camera actuator 1100 and the second camera actuator 1200 by the cover CV.

Furthermore, the cover CV may be made of a material which blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator.

In the embodiment, the first camera actuator 1100 may change an optical path. In the embodiment, the first camera actuator 1100 may change the optical path vertically through an optical member (e.g., a prism or a mirror) therein. With this configuration, even when a thickness of a mobile terminal is decreased, a lens with a focal length that is greater than the thickness of the mobile terminal is disposed in the mobile terminal through a change in the optical path so that zooming, auto focusing (AF), and OIS functions may be performed.

The first camera actuator 1100 may change the optical path from a first direction to a third direction. In the specification, an optical axis direction corresponds to a proceeding direction of light provided to an image sensor in the third direction or a Z-axis direction.

Additionally, the first camera actuator 1100 may include a lens disposed in a predetermined barrel (not shown). In addition, the lens may include a fixed focal length lens. The fixed focal length lens may also be referred to as "single focal length lens" or "single lens."

The second camera actuator 1200 may be disposed at a rear end of the first camera actuator 1100. The second camera actuator 1200 may be coupled to the first camera actuator 1100. In addition, mutual coupling may be performed by various methods.

In addition, the second camera actuator 1200 may be a zoom actuator or an AF actuator. For example, the second camera actuator 1200 may support one or more lenses and perform an AF function or a zooming function by moving the lenses according to a predetermined control signal of a control part.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided.

The circuit board 1300 may be connected to a second housing of the second camera actuator 1200 and may have the image sensor. Furthermore, a base unit including a filter may be seated on the circuit board 1300. A description thereof will be given below.

A camera device according to the embodiment may include one or more camera devices. For example, the plurality of camera devices may include a first camera device and a second camera device. In addition, as described above, the camera device may be used interchangeably with "camera module," "camera apparatus," "imaging device," "imaging module," "imaging machine," or the like. Furthermore, the camera actuator refers to a component for moving an optical member, a lens, or the like. Therefore, the camera actuator may or may not include the optical member, the lens, or the like. Hereinafter, description based on a camera actuator including a lens will be given. In addition, the camera actuator may be used interchangeably with "lens moving device," "lens transfer device," "optical member moving device," "zoom lens transfer device," or the like. Therefore, the first camera actuator may be used interchangeably with "first lens transfer device," and the second camera actuator may be used interchangeably with "second lens transfer device." Furthermore, an actuator will be described as being a device for moving an optical member such as a lens, but in the specification, will be described as being the device including the lens.

In addition, the first camera device may include one or more actuators. For example, the first camera device may include the first camera actuator 1100 and the second camera actuator 1200.

In addition, the second camera device may include an actuator (not shown) disposed in a predetermined housing (not shown) and capable of driving a lens unit. The actuator may be a voice coil motor, a micro actuator, a silicon actuator, and the like and applied in various methods such as an electrostatic method, a thermal method, a bimorph method, and an electrostatic force method, but the present disclosure is not limited thereto. In addition, in the specification, a camera actuator may be referred to as an "actuator" or the like. In addition, a camera device composed of a plurality of camera devices may be mounted in various electronic devices such as mobile terminals.

Referring to FIG. 3, the camera device according to the embodiment may include the first camera actuator 1100 for performing the OIS function and the second camera actuator 1200 for performing the zooming function and the AF function.

Light may enter the camera device through an opening region positioned in an upper surface of the first camera actuator 1100. In other words, the light may enter the first camera actuator 1100 in an optical axis direction (e.g., an X-axis direction), and the optical path may be changed in a vertical direction (e.g., a Z-axis direction) through the optical member. In addition, the light may pass through the second camera actuator 1200 and may be incident on an image sensor IS positioned at one end of the second camera actuator 1200 (PATH).

In the specification, the bottom surface refers to one side in a first direction. In addition, the first direction is the X-axis direction in the drawings and may be used interchangeably with a second axis direction or the like. A second direction is a Y-axis direction in the drawings and may be used interchangeably with a first axis direction or the like. The second direction is a direction perpendicular to the first direction. In addition, a third direction is the Z-axis direction in the drawings and may be used interchangeably with a third axis direction or the like. In addition, the third direction is perpendicular to both the first direction and the second direction. Here, the third direction (Z-axis direction) corresponds to the optical axis direction, and the first direction (X-axis direction) and the second direction (Y-axis direction) are directions perpendicular to the optical axis and may be tilted by the second camera actuator. A description thereof will be given below. In addition, hereinafter, the optical axis direction is a third direction (Z-axis direction) in the description of the second camera actuator 1200 and will be described below based on this.

In addition, with this configuration, the camera device according to the embodiment may reduce the spatial limitations of the first camera actuator and the second camera actuator by changing the optical path. In other words, the camera device according to the embodiment may extend the optical path while minimizing the thickness of the camera device in response to the change in the optical path. Furthermore, it should be understood that the second camera actuator may provide a high magnification by controlling a focus or the like in the extended optical path.

In addition, the camera device according to the embodiment may implement an OIS by controlling the optical path through the first camera actuator, thereby minimizing the occurrence of a decentering or tilting phenomenon and providing the best optical characteristics.

Furthermore, the second camera actuator 1200 may include an optical system and a lens driving unit. For example, at least one of a first lens assembly, a second lens assembly, a third lens assembly, and a guide pin may be disposed in the second camera actuator 1200.

In addition, the second camera actuator 1200 may include a coil and a magnet and perform a high-magnification zooming function.

For example, the first lens assembly and the second lens assembly may be moving lenses that each move through the coil, the magnet, and a guide pin, and the third lens assembly may be a fixed lens, but the present disclosure is not limited thereto. For example, the third lens assembly may perform a function of a focator by which light forms an image at a specific position, and the first lens assembly may perform a function of a variator for re-forming an image formed by the third lens assembly, which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the first lens assembly which is the variator. For example, the first lens assembly and the second lens assembly may be driven by an electromagnetic force generated by the interaction between the coil and the magnet. The above description may be applied to a lens assembly to be described below.

Meanwhile, when the OIS actuator and the AF actuator or the zoom actuator are disposed according to the embodiment of the present disclosure, the magnetic field interference with an AF magnet or a zoom magnet can be prevented when an OIS is driven. Since a first optical driving magnet of the first camera actuator 1100 is disposed separately from the second camera actuator 1200, the magnetic field interference between the first camera actuator 1100 and the second camera actuator 1200 can be prevented. In the specification, an OIS may be used interchangeably with terms such as hand shaking correction, optical image stabilization, optical image correction, shake correction, or the like.

FIG. 4 is an exploded perspective view of the first camera actuator according to the embodiment.

Referring to FIG. 4, the first camera actuator 1100 according to the embodiment includes a first shield can (not shown), a first housing 1120, a mover 1130, a rotational unit 1140, and a first optical driving unit 1150.

The mover 1130 may include a holder 1131 and an optical member 1132 seated on the holder 1131. The rotational unit 1140 includes a rotational plate 1141, a first magnetic part 1142 having a coupling force with the rotational plate 1141, and a second magnetic part 1143 positioned in the rotational plate 1141. In addition, the first optical driving unit 1150 includes a first optical driving magnet 1151, a first optical driving coil 1152, a first Hall sensor unit 1153, and a first board unit 1154.

The first shield can (not shown) may be positioned at an outermost side of the first camera actuator 1100 and positioned to surround the rotational unit 1140 and the first optical driving unit 1150, which will be described below.

The first shield can (not shown) may block or reduce the influence of electromagnetic waves generated from the outside. Therefore, it is possible to reduce the number of occurrences of malfunction of the rotational unit 1140 or the first optical driving unit 1150.

The first housing 1120 may be positioned in the first shield can (not shown). In addition, the first housing 1120 may be positioned inside the first board unit 1154 to be described below. The first housing 1120 may be fastened by being fitted into or engaged with the first shield can (not shown).

The first housing 1120 may be composed of a plurality of housing side portions. The first housing 1120 may include a first housing side portion 1121, a second housing side portion 1122, a third housing side portion 1123, and a fourth housing side portion 1124.

The first housing side portion 1121 and the second housing side portion 1122 may be disposed to face each other. In addition, the third housing side portion 1123 and the fourth housing side portion 1124 may be disposed between the first housing side portion 1121 and the second housing side portion 1122.

The third housing side portion 1123 may be in contact with the first housing side portion 1121, the second housing side portion 1122, and the fourth housing side portion 1124. In addition, the third housing side portion 1123 may be a lower portion of the first housing 1120 and include a bottom surface thereof.

In addition, the first housing side portion 1121 may include a first housing hole 1121a. A first coil 1152a to be described below may be positioned in the first housing hole 1121a.

In addition, the second housing side portion 1122 may include a second housing hole 1122a. In addition, a second coil 1152b to be described below may be positioned in the second housing hole 1122a.

The first coil 1152a and the second coil 1152b may be coupled to the first board unit 1154. In an embodiment, the first coil 1152a and the second coil 1152b may be electrically connected to the first board unit 1154 so that a current may flow therethrough. The current is an element of an electromagnetic force by which the first camera actuator may tilt with respect to an X-axis.

In addition, the third housing side portion 1123 may include a third housing hole 1123a. A third coil 1152c to be described below may be positioned in the third housing hole 1123a. The third coil 1152c may be coupled to the first board unit 1154. Further, the third coil 1152c may be electrically connected to the first board unit 1154 so that a current may flow therethrough. The current is an element of the electromagnetic force by which the first camera actuator may tilt with respect to a Y-axis.

The fourth housing side portion 1124 may include a first housing groove 1124a. The first magnetic part 1142 to be described below may be disposed in a region facing the first housing groove 1124a. Therefore, the first housing 1120 may be coupled to the rotational plate 1141 by a magnetic force or the like.

In addition, the first housing groove 1124a according to the embodiment may be positioned on an inner surface or an outer surface of the fourth housing side portion 1124. Therefore, the first magnetic part 1142 may also be disposed to correspond to a position of the first housing groove 1124a.

In addition, the first housing 1120 may include an accommodating portion 1125 formed by the first to fourth housing side portions 1121 to 1224. The mover 1130 may be positioned in the accommodating portion 1125.

The mover 1130 includes the holder 1131 and the optical member 1132 seated on the holder 1131.

The holder 1131 may be seated in the accommodating portion 1125 of the first housing 1120. The holder 1131 may include a first prism outer surface to a fourth prism outer surface respectively corresponding to the first housing side portion 1121, the second housing side portion 1122, the third housing side portion 1123, and the fourth housing side portion 1124.

A seating groove in which the second magnetic part 1143 may be seated may be disposed on the fourth prism outer surface facing the fourth housing side portion 1124.

The optical member 1132 may be seated on the holder 1131. To this end, the holder 1131 may have a seating surface, and the seating surface may be formed by an accommodating groove. The optical member 1132 may include a reflector disposed therein. However, the present disclosure is not limited thereto. In addition, the optical member 1132 may reflect light reflected from the outside (e.g., an object) into the camera device. In other words, the optical member 1132 can reduce spatial limitations of the first camera actuator and the second camera actuator by changing the path of the reflected light. As described above, it should be understood that the camera device may also provide a high magnification by extending an optical path while minimizing a thickness thereof.

The rotational unit 1140 includes the rotational plate 1141, the first magnetic part 1142 having a coupling force with the rotational plate 1141, and the second magnetic part 1143 positioned on the rotational plate 1141.

The rotational plate 1141 may be coupled to the mover 1130 and the first housing 1120. The rotational plate 1141 may include an additional magnetic part (not shown) positioned therein.

In addition, the rotational plate 1141 may be disposed adjacent to the optical axis. Therefore, the actuator according to the embodiment may easily change the optical path according to first axis tilting and second axis tilting, which will be described below.

The rotational plate 1141 may include first protrusions disposed to be spaced apart from each other in a first direction (X-axis direction) and second protrusions disposed to be spaced apart from each other in a second direction (Y-axis direction). In addition, the first protrusion and the second protrusion may protrude in opposite directions. A description thereof will be given below.

In addition, the first magnetic part 1142 may include a plurality of yokes, and the plurality of yokes may be positioned to face each other with respect to the rotational plate 1141. In an embodiment, the first magnetic part 1142 may include a plurality of facing yokes. In addition, the rotational plate 1141 may be positioned between the plurality of yokes.

As described above, the first magnetic part 1142 may be positioned in the first housing 1120. In addition, as described above, the first magnetic part 1142 may be seated on the inner or outer surface of the fourth housing side portion 1124. For example, the first magnetic part 1142 may be seated in a groove formed on the outer surface of the fourth housing side portion 1124. Alternatively, the first magnetic part 1142 may be seated in the first housing groove 1124a.

In addition, the second magnetic part 1143 may be positioned on the mover 1130, particularly, an outer surface of the holder 1131. With this configuration, the rotational plate 1141 may be easily coupled to the first housing 1120 and the mover 1130 by a coupling force generated by a magnetic force between the second magnetic part 1143 and the first magnetic part 1142 therein. In the present disclosure, positions of the first magnetic part 1142 and the second magnetic part 1143 may be changed.

The first optical driving unit 1150 includes the first optical driving magnet 1151, the first optical driving coil 1152, the first Hall sensor unit 1153, and the first board unit 1154.

The first optical driving magnet 1151 may include a plurality of magnets. In an embodiment, the first optical driving magnet 1151 may include a first magnet 1151a, a second magnet 1151b, and a third magnet 1151c.

Each of the first magnet 1151a, the second magnet 1151b, and the third magnet 1151c may be positioned on the outer surface of the holder 1131. In addition, the first magnet 1151a and the second magnet 1151b may be positioned to face each other. In addition, the third magnet 1151c may be positioned on a bottom surface of the outer surface of the holder 1131. A description thereof will be given below.

The first optical driving coil 1152 may include a plurality of coils. In an embodiment, the first optical driving coil 1152 may include the first coil 1152a, the second coil 1152b, and the third coil 1152c.

The first coil 1152a may be positioned to face the first magnet 1151a. Therefore, the first coil 1152a may be positioned in the first housing hole 1121a of the first housing side portion 1121 as described above.

In addition, the second coil 1152b may be positioned to face the second magnet 1151b. Therefore, the second coil 1152b may be positioned in the second housing hole 1122a of the second housing side portion 1122 as described above.

The first coil 1152a may be positioned to face the second coil 1152b. In other words, the first coil 1152a may be positioned to be symmetrical to the second coil 1152b with respect to the first direction (X-axis direction). This may also be applied to the first magnet 1151a and the second magnet 1151b in the same manner. In other words, the first magnet 1151a and the second magnet 1151b may be positioned symmetrically with respect to the first direction (X-axis direction). In addition, the first coil 1152a, the second coil 1152b, the first magnet 1151a, and the second magnet 1151b may be disposed to overlap at least partially in the second direction (Y-axis direction). With this configuration, X-axis tilting may be accurately performed without inclination to one side by an electromagnetic force between the first coil 1152a and the first magnet 1151a and an electromagnetic force between the second coil 1152b and the second magnet 1151b.

The third coil 1152c may be positioned to face the third magnet 1151c. Therefore, the third coil 1152c may be positioned in the third housing hole 1123a of the third housing side portion 1123 as described above. The third coil 1152c generates an electromagnetic force with the third magnet 1151c so that the mover 1130 and the rotational unit 1140 may perform Y axis tilting with respect to the first housing 1120.

Here, the X-axis tilting refers to tilting based on the X-axis, and the Y-axis tilting refers to tilting based on the Y-axis.

The first Hall sensor unit 1153 may include a plurality of Hall sensors. The Hall sensor corresponds to "sensor" described below and is used interchangeably therewith. In an embodiment, the first Hall sensor unit 1153 may include a first Hall sensor 1153a, a second Hall sensor 1153b, and a third Hall sensor 1153c.

The first Hall sensor 1153a may be positioned inside the first coil 1152a. The second Hall sensor 1153b may be disposed to be symmetrical with the first Hall sensor 1153a with respect to the first direction (X-axis direction) and the third direction (Z-axis direction). In addition, the second Hall sensor 1153b may be positioned inside the second coil 1152b.

The first Hall sensor 1153a may detect a change in magnetic flux inside the first coil 1152a. In addition, the second Hall sensor 1153b may detect a change in magnetic flux in the second coil 1152b. Therefore, positions between the first and second magnets 1151a and 1151b and the first and second Hall sensors 1153a and 1153b may be sensed. For example, the first camera actuator according to the embodiment may more accurately control X-axis tilting by detecting the position through the first and second Hall sensors 1153a and 1153b.

In addition, the third Hall sensor 1153c may be positioned inside the third coil 1152c. The third Hall sensor 1153c may detect a change in magnetic flux inside the third coil 1152c. Therefore, a position between the third magnet 1151c and the third Hall sensor 1153bc may be sensed. Therefore, the first camera actuator according to the embodiment may control Y-axis tilting. One or more first to third Hall sensors may be provided.

The first board unit 1154 may be positioned on a lower portion of the first optical driving unit 1150. The first board unit 1154 may be electrically connected to the first optical driving coil 1152 and the first Hall sensor unit 1153. For example, the first board unit 1154 may be coupled to the first optical driving coil 1152 and the first Hall sensor unit 1153 through a surface mounting technology (SMT). However, the present disclosure is not limited to this method.

The first board unit 1154 may be positioned between the first shield can (not shown) and the first housing 1120 and coupled to the first shield can and the first housing 1120. The coupling method may be variously performed as described above. In addition, through the coupling, the first optical driving coil 1152 and the first Hall sensor unit 1153 may be positioned within an outer surface of the first housing 1120.

The first board unit 1154 includes a circuit board having line patterns that may be electrically connected, such as a rigid printed circuit board (RPCB), a flexible PCB (FPCB), and a rigid flexible PCB (RFPCB). However, the present disclosure is not limited to these types.

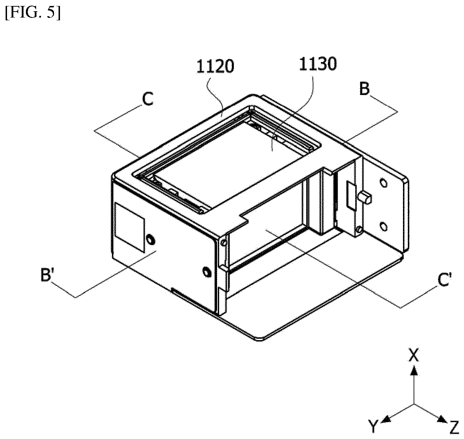

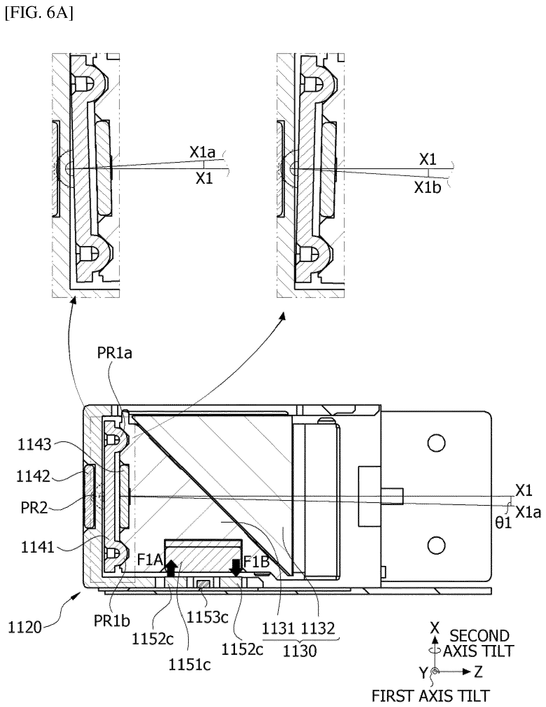

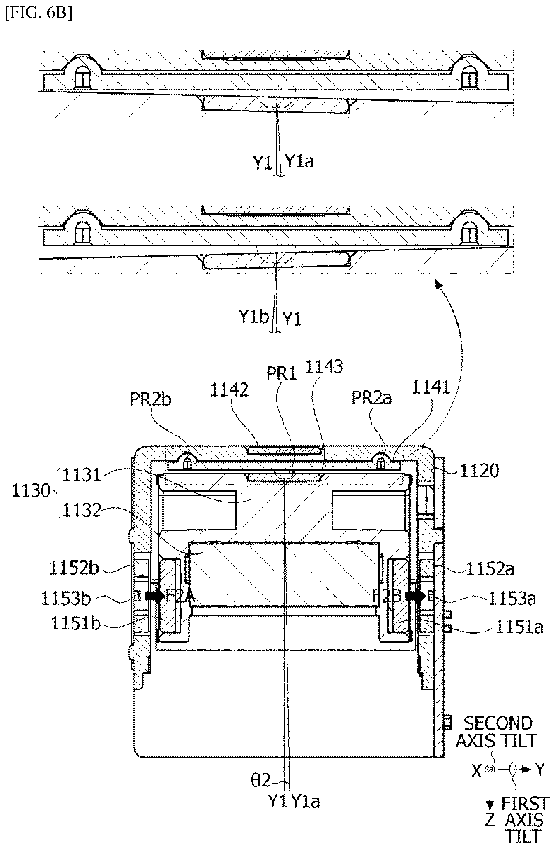

FIG. 5 is a perspective view of the first camera actuator according to the embodiment from which a first shield can and a board are removed, FIG. 6A is a cross-sectional view along line B-B' in FIG. 5, and FIG. 6B is a cross-sectional view along line C-C' in FIG. 5.

FIG. 5 is a perspective view of the first camera actuator according to the embodiment from which a shield can and a board are removed, FIG. 6A is a cross-sectional view along line B-B' in FIG. 5, and FIG. 6B is a cross-sectional view along line C-C' in FIG. 5.

Referring to FIGS. 5 to 6B, the third coil 1152a may be positioned on the first housing side portion 1121.

In addition, the third coil 1152a and the first magnet 1151a may be positioned to face each other. At least a portion of the first magnet 1151a may overlap the third coil 1152a in the second direction (Y-axis direction).

In addition, the fourth coil 1152b may be positioned on the second housing side portion 1122. Therefore, the fourth coil 1152b and the second magnet 1151b may be positioned to face each other. At least a portion of the second magnet 1151b may overlap the fourth coil 1152b in the second direction (Y-axis direction).

In addition, the third coil 1152a and the fourth coil 1152b may overlap in the second direction (Y-axis direction), and the first magnet 1151a and the second magnet 1151b may overlap in the second direction (Y-axis direction). With this configuration, an electromagnetic force applied to the outer surfaces of the holders (the first holder outer surface and the second holder outer surface) may be positioned on a parallel axis in the second direction (Y-axis direction), thereby accurately and precisely performing X-axis tilting.

In addition, a first accommodating groove (not shown) may be positioned in a fourth holder outer surface. In addition, first protrusions PR1a and PRIb may be disposed in the first accommodating groove. Therefore, when X-axis tilting is performed, the first protrusions PR1a and PRIb may be reference axes (or rotational axes) of the tilt. Therefore, the tilting guide unit 1141 and the mover 1130 may move in a left-right direction.

As described above, the second protrusion PR2 may be seated in the groove of an inner surface of the fourth housing side portion 1124. In addition, when Y-axis tilting is performed, the rotational plate and the mover may be rotated about the second protrusion PR2 that is a reference axis of the Y-axis tilt.

According to the embodiment, an OIS function may be performed by the first protrusion and the second protrusion.

Referring to FIG. 6A, Y-axis tilting may be performed. In other words, an OIS can be implemented by the rotation in the first direction (X-axis direction).

In an embodiment, the third magnet 1151c disposed under the holder 1131 may form an electromagnetic force with the fifth coil 1152c to tilt or rotate the mover 1130 in the first direction (X-axis direction).

Specifically, the tilting guide unit 1141 may be coupled to the first housing 1120 and the mover 1130 by the first magnetic part 1142 in the first housing 1120 and the second magnetic part 1143 in the mover 1130. In addition, the first protrusions PR1 may be spaced apart from each other in the first direction (X-axis direction) and supported by the first housing 1120.

In addition, the tilting guide unit 1141 may rotate or tilt based on the second protrusion PR2 protruding toward the mover 1130, which is the reference axis (or the rotational axis). In other words, the tilting guide unit 1141 may perform Y-axis tilting based on the second protrusion PR2 that is the reference axis.

For example, an OIS can be implemented by rotating (X1→X1a or X1bb) the mover 130 at a first angle θ1 in the X-axis direction by first electromagnetic forces F1A and F1B between the third magnet 1151c disposed in the third seating groove and the fifth magnet 1152c disposed on the third board side portion. The first angle θ1 may be in the range of ±1° to ±3°. However, the present disclosure is not limited thereto.

Hereinafter, in the first camera actuators according to various embodiments, the electromagnetic force may move the mover by generating a force in the described direction or move the mover in the described direction even when a force is generated in another direction. In other words, the described direction of the electromagnetic force refers to a direction of the force generated by the magnet and the coil to move the mover.

Referring to FIG. 6B, X-axis tilting may be performed. In other words, an OIS can be implemented by the rotation in the second direction (Y-axis direction).

The OIS can be implemented by tilting or rotating (or X-axis tilting) the mover 1130 in the Y-axis direction.

In an embodiment, the first magnet 1151a and the second magnet 1151b disposed on the holder 1131 generate electromagnetic forces with the third coil 1152a and the fourth coil 1152b, respectively, to tilt or move the tilting guide unit 1141 and the mover 1130 in the second direction (Y-axis direction).

The tilting guide unit 1141 may rotate or tilt (may perform X-axis tilting) based on the first protrusion PR1 that is a reference axis (or a rotational axis) in the second direction.

For example, the OIS can be implemented by rotating (Y1→ Y1a or Y1b) the mover 1130 at a second angle θ2 in the Y-axis direction by second electromagnetic forces F2A and F2B between the third and fourth magnets 1151a and 1151b disposed in the first seating groove and the third and fourth coils 1152a and 1152b disposed on the first and second board side portions. The second angle θ2 may be in the range of ±1° to ±3°. However, the present disclosure is not limited thereto.

In addition, as described above, the electromagnetic force generated by the third and fourth magnets 1151a and 1151b and the third and fourth coils 1152a and 1152b may act in the third direction or in a direction opposite to the third direction. For example, the electromagnetic force may be generated from a left portion of the mover 1130 in the third direction (Z-axis direction) and may act from a right portion of the mover 1130 in the direction opposite to the third direction (Z-axis direction). Therefore, the mover 1130 may rotate with respect to the first direction. Alternatively, the mover 1130 may move along the second direction.

As described above, the second actuator according to the embodiment may control the tilting guide unit 1141 and the mover 1130 to be rotated in the first direction (X-axis direction) or the second direction (Y-axis direction) by the electromagnetic force between the first optical driving magnet in the holder and the first optical driving coil disposed in the housing, thereby minimizing the occurrence of a decentering or tilting phenomenon when implementing an OIS and providing the best optical characteristics. In addition, as described above, "Y-axis tilting" corresponds to the rotation or tilting in the first direction (X-axis direction), and "X-axis tilting" corresponds to the rotation or tilting in the second direction (Y-axis direction).

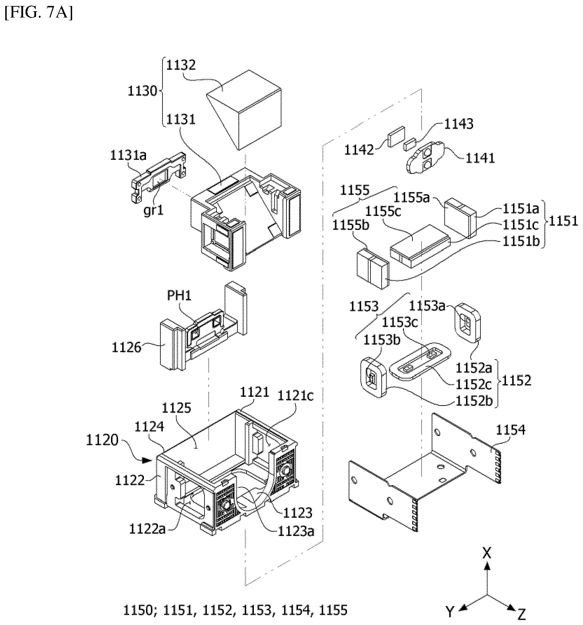

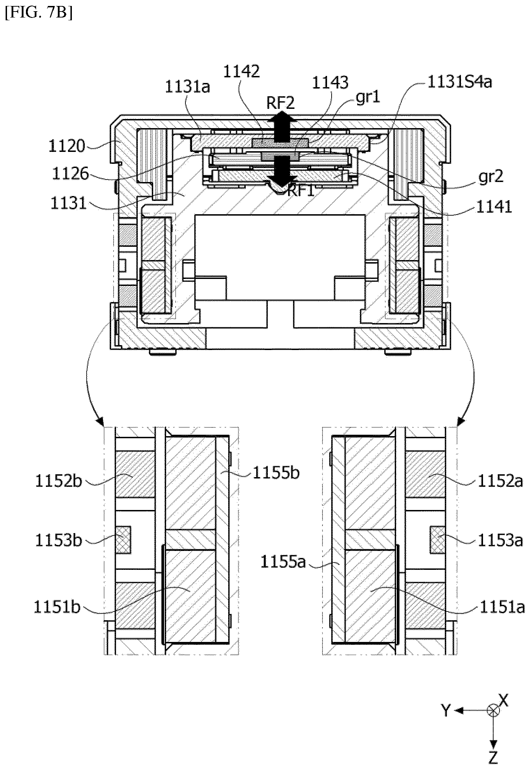

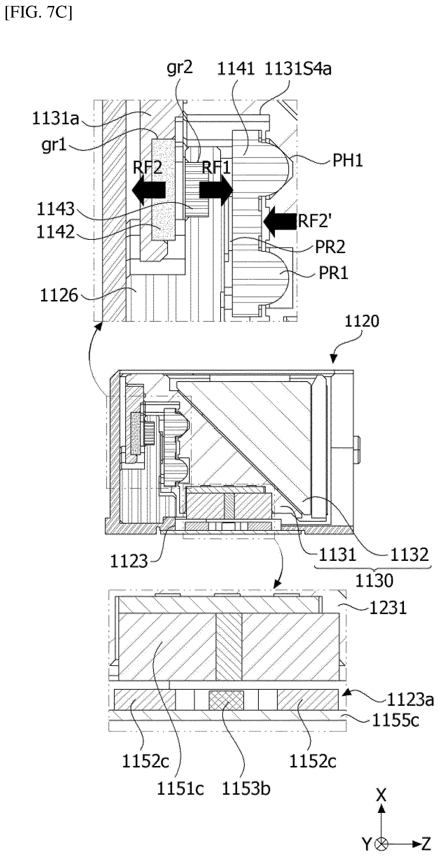

FIG. 7A is an exploded perspective view of a first camera actuator according to another embodiment, FIG. 7B is a cross-sectional view of the first camera actuator according to another embodiment, and FIG. 7C is another cross-sectional view of the first camera actuator according to another embodiment.

Referring to FIGS. 7A to 7C, a first camera actuator 1100 according to another embodiment includes a first housing 1120, the mover 1130, a rotational unit 1140, a first optical driving unit 1150, a first member 1126, and a second member 1131a.

The mover 1130 may include a holder 1131 and an optical member 1132 seated on the holder 1131. In addition, the mover 1130 may be disposed in the housing 1120. In addition, the rotational unit 1140 may include a tilting guide unit 1141, and a second magnetic part 1142 and a first magnetic part 1143 having different polarities to press the tilting guide unit 1141. The first magnetic part 1143 and the second magnetic part 1142 may have different sizes. In an embodiment, the first magnetic part 1143 may have a greater size than the second magnetic part 1142. For example, the first magnetic part 1143 and the second magnetic part 1142 may have the same length in the optical axis direction or the third direction (Z-axis direction) and have different areas in the first direction and the second direction. In this case, the area of the first magnetic part 1143 may be greater than the area of the second magnetic part 1142. In addition, the first optical driving unit 1150 includes a first optical driving magnet 1151, a first optical driving coil 1152, a Hall sensor unit 1153, a first board unit 1154, and a yoke unit 1155.

First, the first camera actuator 1100 may include a shield can (not shown). The shield can (not shown) may be positioned at an outermost side of the first camera actuator 1100 and positioned to surround the rotational unit 1140 and the first optical driving unit 1150, which will be described below.

The shield can (not shown) may block or reduce the influence of electromagnetic waves generated from the outside. In other words, the shield can (not shown) may reduce the number of occurrences of malfunction of the rotational unit 1140 or the first optical driving unit 1150.

The first housing 1120 may be positioned inside the shield can (not shown). When there is no shield can, the first housing 1120 may be positioned at the outermost side of the first camera actuator.

In addition, the first housing 1120 may be positioned inside the first board unit 1154 to be described below. The first housing 1120 may be fastened by being fitted into or engaged with the shield can (not shown).

The first housing 1120 may include a first housing side portion 1121, a second housing side portion 1122, a third housing side portion 1123, and a fourth housing side portion 1124. A description thereof will be given below.

The first member 1126 may be disposed in the first housing 1120. The first member 1126 may be disposed between the second member 1131a and the housing. The first member 1126 may be disposed in the housing or positioned on one side of the housing. A description thereof will be given below.

The mover 1130 includes the holder 1131 and the optical member 1132 seated on the holder 1131.

The holder 1131 may be seated in the accommodating portion 1125 of the first housing 1120. The holder 1131 may include a first holder outer surface to a fourth holder outer surface respectively corresponding to the first housing side portion 1121, the second housing side portion 1122, the third housing side portion 1123, and the first member 1126. For example, the first holder outer surface to the fourth holder outer surface may correspond to or face inner surfaces of the first housing side portion 1121, the second housing side portion 1122, the third housing side portion 1123, and the first member 1126, respectively.

In addition, the holder 1131 may include the second member 1131a disposed in a fourth seating groove. A description thereof will be given below.

The optical member 1132 may be seated on the holder 1131. To this end, the holder 1131 may have a seating surface, and the seating surface may be formed by an accommodating groove. In an embodiment, the optical member 1132 may be formed as a mirror or a prism. Hereinafter, although shown based on the prism, the optical member 1132 may be composed of a plurality of lenses as in the above-described embodiment. Alternatively, the optical member 1132 may include a plurality of lenses and prisms or mirrors. In addition, the optical member 1132 may include a reflector disposed therein. However, the present disclosure is not limited thereto.

In addition, the optical member 1132 may reflect light reflected from the outside (e.g., an object) into the camera module. In other words, the optical member 1132 may reduce spatial limitations of the first camera actuator and the second camera actuator by changing the path of the reflected light. As described above, it should be understood that the camera module may also provide a high magnification by extending the optical path while minimizing the thickness thereof.

Additionally, the second member 1131a may be coupled to the holder 1131. The second member 1131a may be disposed outside the holder 1131 and inside the housing. In addition, the second member 1131a may be seated in an additional groove positioned in an area of the fourth holder outer surface other than the fourth seating groove in the holder 1131. Therefore, the second member 1131a may be coupled to the holder 1131, and at least a portion of the first member 1126 may be positioned between the second member 1131a and the holder 1131. For example, at least a portion of the first member 1126 may pass through a space formed between the second member 1131a and the holder 1131.

In addition, the second member 1131a may be formed in a structure separated from the holder 1131. With this configuration, the first camera actuator can be easily assembled as will be described below. Alternatively, the second member 1131a may be formed integrally with the holder 1131, but a separated structure will be described below.

The rotational unit 1140 includes the tilting guide unit 1141, and the second magnetic part 1142 and the first magnetic part 1143 having different polarities to press the tilting guide unit 1141.

The tilting guide unit 1141 may be coupled to the mover 1130 and the first housing 1120. Specifically, the tilting guide unit 1141 may be disposed between the holder 1131 and the first member 1126. Therefore, the tilting guide unit 1141 may be coupled to the mover 1130 of the holder 1131 and the first housing 1120. However, unlike the above description, in the embodiment, the tilting guide unit 1141 may be disposed between the first member 1126 and the holder 1131. Specifically, the tilting guide unit 1141 may be positioned between the first member 1126 and the fourth seating groove of the holder 1131.

In addition, the second magnetic part 1142 and the first magnetic part 1143 may be seated in a first groove gr1 formed in the second member 1131a and a second groove gr2 formed in the first member 1126, respectively. In the embodiment, the first groove gr1 and the second groove gr2 may have different positions different from those of the first and second grooves described in the above-described embodiments. However, the first groove gr1 is positioned in the second member 1131a and moves integrally with the holder, and the second groove gr2 is positioned on the first member 1126 corresponding to the first groove gr1 and coupled to the first housing 1120. Therefore, a description will be given by interchangeably using these terms.

In addition, the tilting guide unit 1141 may be disposed adjacent to the optical axis. Therefore, the actuator according to another embodiment may easily change the optical path according to first axis tilting and second axis tilting, which will be described below.

The tilting guide unit 1141 may include first protrusions spaced apart from each other in the first direction (X-axis direction) and second protrusions spaced apart from each other in the second direction (Y-axis direction). In addition, the first protrusion and the second protrusion may protrude in opposite directions. A description thereof will be given below. The first protrusion may protrude toward the mover. In addition, the first protrusion may extend from a base in the optical axis direction or the third direction (Z-axis direction). The second protrusion may protrude in a direction opposite to the first protrusion. In other words, the second protrusion may extend in a direction opposite to the optical axis direction or in a direction opposite to the third direction (Z-axis direction). In addition, the second protrusion may extend toward the first member 1126 or the housing 1120.

In addition, as described above, the second magnetic part 1142 may be positioned in the second member 1131a. In addition, the first magnetic part 1143 may be positioned in the first member 1126.

The second magnetic part 1142 and the first magnetic part 1143 may have the same polarity. For example, the second magnetic part 1142 may be a magnet having an N pole, and the first magnetic part 1143 may be a magnet having an N pole. Alternatively, the second magnetic part 1142 may be a magnet having an S pole, and the first magnetic part 1143 may be a magnet having an S pole.

For example, a first pole face of the first magnetic part 1143 and a second pole face of the second magnetic part 1142 facing the first pole surface may have the same polarity.

The second magnetic part 1142 and the first magnetic part 1143 may generate a repulsive force between each other due to the above-described polarities. With this configuration, the repulsive force described above may be applied to the second member 1131a or the holder 1131 coupled to the second magnetic part 1142 and the first member 1126 or the first housing 1120 coupled to the first magnetic part 1143. At this time, the repulsive force applied to the second member 1131a may be transmitted to the holder 1131 coupled to the second member 1131a. Therefore, the tilting guide unit 1141 disposed between the second member 1131a and the first member 1126 may be pressed by the repulsive force. In other words, the repulsive force may maintain the position of the tilting guide unit 1141 between the holder 1131 and the first housing 1120 (or the first member 1126). With this configuration, the position between the mover 1130 and the first housing 1120 may be maintained even when X-axis tilting or Y-axis tilting is performed. In addition, the tilting guide unit may be in close contact with the first member 1126 and the holder 1131 by the repulsive force between the first magnetic part 1143 and the second magnetic part 1142. The tilting guide unit 1141 may guide the tilting of the mover 1130.

The first optical driving unit 1150 includes the first optical driving magnet 1151, the first optical driving coil 1152, the Hall sensor unit 1153, the first board unit 1154, and the yoke unit 1155. The above description may be applied to a description thereof in the same manner except for the contents described in the embodiment.

The third coil 1152a may be positioned on the first housing side portion 1121, and the first magnet 1151a may be positioned on a first holder outer surface 1131S1 of the holder 1131. Therefore, the third coil 1152a and the first magnet 1151a may be positioned to face each other. At least a portion of the first magnet 1151a may overlap the third coil 1152a in the second direction (Y-axis direction).

In addition, the fourth coil 1152b may be positioned on the second housing side portion 1122, and the second magnet 1151b may be positioned on a second holder outer surface 1131S2 of the holder 1131. Therefore, the fourth coil 1152b and the second magnet 1151b may be positioned to face each other. At least a portion of the second magnet 1151b may overlap the fourth coil 1152b in the second direction (Y-axis direction).

In addition, the third coil 1152a and the fourth coil 1152b may overlap in the second direction (Y-axis direction), and the first magnet 1151a and the second magnet 1151b may overlap in the second direction (Y-axis direction).

With this configuration, an electromagnetic force applied to the outer surfaces of the holders (the first holder outer surface and the second holder outer surface) may be positioned on a parallel axis in the second direction (Y-axis direction), thereby accurately and precisely performing X-axis tilting.

In addition, second protrusions PR2a and PR2b of the tilting guide unit 1141 may be in contact with the first member 1126 of the first housing 1120. The second protrusion PR2 may be seated in a second protrusion groove PH2 formed in one side surface of the first member 1126. In addition, when X-axis tilting is performed, the second protrusions PR2a and PR2b may be reference axes (or rotational axes) of the tilt. Therefore, the tilting guide unit 1141 and the mover 1130 may move in the second direction.

In addition, as described above, the first Hall sensor 1153a may be positioned outside for electrical connection and coupling with the first board unit 1154. However, the present disclosure is not limited to these positions.

In addition, the fifth coil 1152c may be positioned on the third housing side portion 1123, and the third magnet 1151c may be positioned on a third holder outer surface 1131 S3 of the holder 1131. The fifth coil 1152c and the third magnet 1151c may at least partially overlap in the first direction (X-axis direction). Therefore, an intensity of the electromagnetic force between the fifth coil 1152c and the third magnet 1151c may be easily controlled.

As described above, the tilting guide unit 1141 may be positioned on the fourth holder outer surface 1131 S4 of the holder 1131. In addition, the tilting guide unit 1141 may be seated in a fourth seating groove 1131S4a on the fourth holder outer surface. As described above, the fourth seating groove 1131S4a may include a first region, a second region, and a third region.

The second member 1131a may be positioned in the first region. In other words, the first region may overlap the second member 1131a in the first direction (X-axis direction). In particular, the first region may be a region where a member base unit of the second member 1131a is positioned. In this case, the first region may be positioned on the fourth holder outer surface 1131S4. In other words, the first region may correspond to a region positioned above the fourth seating groove 1131S4a. In this case, the first region may not be one region within the fourth seating groove 1131S4a.

The first member 1126 may be positioned in the second region. In other words, the second region may overlap the first member 1126 in the first direction (X-axis direction).

In addition, the second region may be positioned on the fourth holder outer surface 1131S4 like the first region. In other words, the second region may correspond to a region positioned above the fourth seating groove 1131S4a.

The tilting guide unit may be positioned in the third region. In particular, the base of the tilting guide unit may be positioned in the third region. In other words, the third region may overlap the tilting guide unit (e.g., the base) in the first direction (X-axis direction).

The second member 1131a is disposed in the first region, and the second member 1131a may include the first groove gr1 formed on an inner surface thereof. In addition, as described above, the second magnetic part 1142 may be disposed in the first groove gr1, and a repulsive force RF2 generated from the second magnetic part 1142 may be transmitted to the fourth seating groove 1131S4a of the holder 1131 through the second member 1131a (RF2'). Therefore, the holder 1131 may apply a force to the tilting guide unit 1141 in the same direction as that of the repulsive force RF2 generated from the second magnetic part 1142.

The first member 1126 may be disposed in the second region. The first member 1126 may include the second groove gr2 facing the first groove gr1. In addition, the first member 1126 may include a second protrusion groove PH2 disposed on a surface corresponding to the second groove gr2. In addition, a repulsive force RF1 generated from the first magnetic part 1143 may be applied to the first member 1126. Therefore, the first member 1126 and the second member 1131a may press the tilting guide unit 1141 disposed between the first member 1126 and the holder 1131 through the generated repulsive forces RF1 and RF2'. Therefore, even after the holder tilts to the X-axis or the Y-axis by a current applied to the first and second coils or the fifth coil 1152c, the coupling between the holder 1131, the first housing 1120, and the tilting guide unit 1141 may be maintained.

The tilting guide unit 1141 may be disposed in the third region. As described above, the tilting guide unit 1141 may include the first protrusion PR1 and the second protrusion PR2. In this case, the first protrusion PR1 and the second protrusion PR2 may also be disposed on a second face 1141b and a first face 1141a of the base, respectively. As described above, even in another embodiment to be described below, the first protrusion PR1 and the second protrusion PR2 may be variously positioned on the facing faces of the base.

The first protrusion groove PH1 may be positioned in the fourth seating groove 1131S4a. In addition, the first protrusion PR1 of the tilting guide unit 1141 may be accommodated in the first protrusion groove PH1. Therefore, the first protrusion PR1 may be in contact with the first protrusion groove PH1. A maximum diameter of the first protrusion groove PH1 may correspond to a maximum diameter of the first protrusion PR1. This may also be applied to the second protrusion groove PH2 and the second protrusion PR2 in the same manner. In other words, a maximum diameter of the second protrusion groove PH2 may correspond to a maximum diameter of the second protrusion PR2. In addition, therefore, the second protrusion PR2 may be in contact with the second protrusion groove PH2. With this configuration, the first axis tilt with respect to the first protrusion PR1 and the second axis tilt with respect to the second protrusion PR2 may easily occur, thereby increasing a radius of the tilt.

In addition, since the tilting guide unit 1141 may be disposed side by side with the second member 1131a and the first member 1126 in the third direction (Z-axis direction), the tilting guide unit 1141 may overlap the optical member 1132 in the first direction (X-axis direction). More specifically, in the embodiment, the first protrusion PR1 may overlap the optical member 1132 in the first direction (X-axis direction). Furthermore, at least a portion of the first protrusion PR1 may overlap the fifth coil 1152c or the third magnet 1151c in the first direction (X-axis direction). In other words, in the camera actuator according to the embodiment, each protrusion, which is a central axis of the tilt, may be positioned adjacent to the center of gravity of the mover 1130. Therefore, the tilting guide unit may be positioned adjacent to the center of gravity of the holder. Therefore, the camera actuator according to the embodiment can minimize a moment value for tilting the holder and also minimize the consumption of current applied to the coil unit to tilt the holder, thereby reducing power consumption and improving the reliability of the device.

In addition, the second magnetic part 1142 and the first magnetic part 1143 may not overlap the fifth coil 1152c or the optical member 1132 in the first direction (X-axis direction). In other words, in the embodiment, the second magnetic part 1142 and the first magnetic part 1143 may be disposed to be spaced apart from the fifth coil 1152c or the optical member 1132 in the third direction (Z-axis direction). Therefore, it is possible to minimize the magnetic forces transmitted to the fifth coil 1152c from the second magnetic part 1142 and the first magnetic part 1143. Therefore, the camera actuator according to the embodiment may easily perform the vertical driving (Y-axis tilting), thereby minimizing power consumption.

Furthermore, as described above, the second Hall sensor 1153b positioned inside the fifth coil 1152c may detect a change in magnetic flux, and thus the position between the third magnet 1151c and the second Hall sensor 1153b may be sensed. At this time, an offset voltage of the second Hall sensor 1153b may be changed depending on the influence of the magnetic fields formed from the second magnetic part 1142 and the first magnetic part 1143.

The first camera actuator according to the embodiment may include the second member 1131a, the second magnetic part 1142, the first magnetic part 1143, the first member 1126, the tilting guide unit 1141, and the holder 1131 sequentially disposed. However, since the second magnetic part is positioned in the second member and the first magnetic part is positioned in the first member, the second member, the first member, the tilting guide unit, and the holder may be sequentially disposed.

In addition, in an embodiment, the second magnetic part 1142 and the first magnetic part 1143 may have a separation distance from the holder 1131 (or the optical member 1132) in the third direction greater than a separation distance from the tilting guide unit 1141. Therefore, the second Hall sensor 1153b under the holder 1131 may also be disposed to be spaced a predetermined distance from the second magnetic part 1142 and the first magnetic part 1143. Therefore, it is possible to minimize the influence of the magnetic fields formed by the second magnetic part 1142 and the first magnetic part 1143 on the second Hall sensor 1153b, thereby preventing a Hall voltage from being concentrated to a positive or negative value and saturated. In other words, this configuration allows a Hall electrode to have a range in which Hall calibration may be performed. Furthermore, a temperature is also affected by an electrode of the Hall sensor, the resolution of a camera lens varies depending on the temperature, but in the embodiment, it is possible to prevent the case in which the Hall voltage is concentrated to the positive or negative value and also compensating for the resolution of the lens in response thereto, thereby easily preventing a reduction in the resolution.

In addition, it is also possible to easily design a circuit for compensating for an offset for the output (i.e., the Hall voltage) of the second Hall sensor 1153b.

In addition, according to the embodiment, some regions of the tilting guide unit 1141 may be positioned outside the fourth holder outer surface relative to the fourth holder outer surface of the holder 1131.

The tilting guide unit 1141 may be seated in the fourth seating groove 1131S4a with respect to the base except for the first protrusion PR1 and the second protrusion PR2. In other words, a length of the base in the third direction (Z-axis direction) may be smaller than a length of the fourth seating groove 1131S4a in the third direction (Z-axis direction). With this configuration, miniaturization can be easily achieved.

In addition, a maximum length of the tilting guide unit 1141 in the third direction (Z-axis direction) may be greater than the length of the fourth seating groove 1131S4a in the third direction (Z-axis direction). Therefore, as described above, an end of the second protrusion PR2 may be positioned between the fourth holder outer surface and the first member 1126. In other words, at least a portion of the second protrusion PR2 may be positioned in a direction opposite to the third direction (Z-axis direction) from the holder 1131. In other words, the holder 1131 may be spaced a predetermined distance from the end of the second protrusion PR2 (the portion in contact with the second protrusion groove) in the third direction (Z-axis direction).

With this configuration, the second member 1131a can be positioned inside the first member 1126 or positioned to surround the first member 1126, thereby improving space efficiency and realizing miniaturization. Furthermore, even when the driving (the tilting or rotation of the mover 1130) by the electromagnetic force is performed, the second member 1131a does not protrude outward from the first member 1126, and thus the contact with surrounding devices can be blocked. Therefore, it is possible to improve reliability.

In addition, a predetermined separation space may be present between the second magnetic part 1142 and the first magnetic part 1143. In other words, the second magnetic part 1142 and the first magnetic part 1143 may face each other in the same polarity.

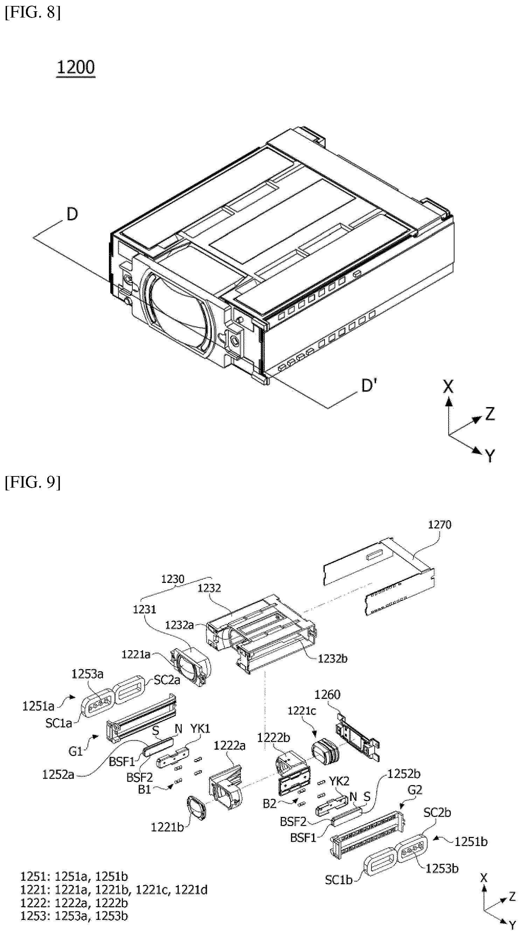

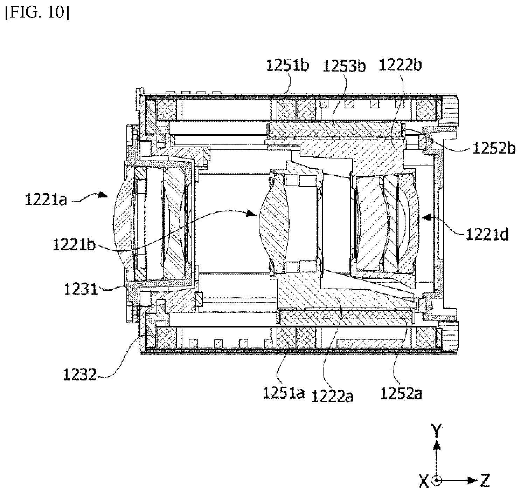

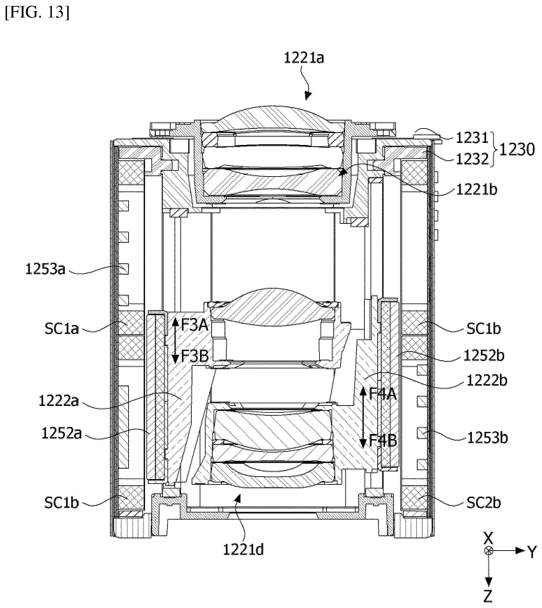

FIG. 8 is a perspective view of a second camera actuator according to the embodiment, FIG. 9 is an exploded perspective view of the second camera actuator according to the embodiment, FIG. 10 is a cross-sectional view along line D-D' in FIG. 8, FIGS. 11 and 12 are views for describing the driving of each lens assembly according to an embodiment, and FIG. 13 is a view showing the driving of the second camera actuator according to an embodiment.

Referring to FIGS. 8 to 10, the second camera actuator 1200 (or a camera device, a zoom lens transport device, a zoom lens moving device, or a lens transport device) according to the embodiment may include a lens unit 1220, a second housing 1230, a second optical driving unit 1250, a base unit 1260, a second board unit 1270, and a bonding member 1280. Furthermore, the second camera actuator 1200 may further include a second shield can (not shown), an elastic unit (not shown), and a bonding member (not shown).

In addition, as will be described below, a lens group may move in the optical axis direction. In addition, the lens group may be coupled to a lens assembly and may move in the optical axis direction. In this case, the second camera actuator may include a moving unit moving in the optical axis direction together with the lens group and a fixed unit relatively fixed without moving in the optical axis direction unlike the moving unit. In the embodiment, the moving unit may include a lens assembly (e.g., first and second lens assemblies) and a second optical driving magnet (first and second driving magnets). In addition, the fixed unit may include a second housing, a second board unit, a second optical driving coil, and a Hall sensor. Furthermore, a driving magnet may be disposed on one of the moving unit and the fixed unit, and a driving coil may be disposed on the other. A moving distance of the lens assembly to be described below corresponding to this description may correspond to a moving distance of the moving unit.

The second shield can (not shown) may be positioned in one region (e.g., an outermost side) of the second camera actuator 1200 and positioned to surround the following components (the lens unit 1220, the second housing 1230, the second optical driving unit 1250, the base unit 1260, the second board unit 1270, and an image sensor IS).

The second shield can (not shown) may block or reduce the influence of electromagnetic waves generated from the outside. Therefore, it is possible to reduce the number of occurrences of malfunction of the second optical driving unit 1250.

The lens unit 1220 may be positioned in the second shield can (not shown). The lens unit 1220 may move in the third direction (Z-axis direction or optical axis direction). Therefore, the AF function or zooming function described above may be performed.

In addition, the lens unit 1220 may be positioned in the second housing 1230. Therefore, at least a portion of the lens unit 1220 may move in the optical axis direction or the third direction (Z-axis direction) in the second housing 1230.

Specifically, the lens unit 1220 may include a lens group 1221 and a moving assembly 1222.

First, the lens group 1221 may include one or more lenses. In addition, a plurality of lens groups 1221 may be provided, hereinafter, but a description will be given based on one lens group.

The lens group 1221 may be coupled to the moving assembly 1222 and may move in the third direction (Z-axis direction) by the electromagnetic forces generated from a fourth magnet 1252a and a fifth magnet 1252b coupled to the moving assembly 1222.

In an embodiment, the lens group 1221 may include a first lens group 1221a, a second lens group 1221b, and a third lens group 1221c. The first lens group 1221a, the second lens group 1221b, and the third lens group 1221c may be sequentially disposed in the optical axis direction. Furthermore, the lens group 1221 may further include a fourth lens group 1221d. The fourth lens group 1221d may be disposed on a rear end of the third lens group 1221c.

The first lens group 1221a may be coupled to and fixed to a 2-1 housing. In other words, the first lens group 1221a may not move in the optical axis direction.

The second lens group 1221b may be coupled to the first lens assembly 1222a and may move in the third direction or the optical axis direction. Magnification may be adjusted by moving the first lens assembly 1222a and the second lens group 1221b.

The third lens group 1221c may be coupled to the second lens assembly 1222b and may move in the third direction or the optical axis direction. Focal adjustment or AF function may be performed by moving the third lens group 1221.

However, the present disclosure is not limited to the number of lens groups, and the fourth lens group 1221d described above may not be present or an additional lens group other than the fourth lens group 1121d may be further disposed.

The moving assembly 1222 may include an opening region surrounding the lens group 1221. The moving assembly 1222 is used interchangeably with the lens assembly. The moving assembly 1222 or the lens assembly may move in the optical axis direction (Z-axis direction) in the second housing 1230. In addition, the moving assembly 1222 may be coupled to the lens group 1221 by various methods. In addition, the moving assembly 1222 may include a groove in a side surface thereof, and may be coupled to the fourth magnet 1252a and the fifth magnet 1252b through the groove. A coupling member or the like may be applied to the groove.

In addition, the moving assembly 1222 may be coupled to the elastic units (not shown) on an upper end and a lower end thereof. Therefore, the moving assembly 1222 may be supported by the elastic unit (not shown) while moving in the third direction (Z-axis direction). In other words, the moving assembly 1222 may be maintained in the third direction (Z-axis direction) as the position of the moving assembly 1222 is maintained. The elastic unit (not shown) may be formed as various elastic devices such as a leaf spring.

The moving assembly 1222 may be positioned in the second housing 1230 and may include the first lens assembly 1222a and the second lens assembly 1222b.

A region where the third lens group is seated in the second lens assembly 1222b may be positioned on a rear end of the first lens assembly 1222a. In other words, the region where the third lens group 1221c is seated in the second lens assembly 1222b may be positioned between a region where the second lens group 1221b is seated in the first lens assembly 1222a and the image sensor.

The first lens assembly 1222a and the second lens assembly 1222b may be to face a first guide unit G1 and a second guide unit G2, respectively. The first guide unit G1 and the second guide unit G2 may be positioned on a first side portion and a second side portion of the second housing 1230 to be described below.

In addition, the second optical driving magnet may be seated on outer surfaces of the first lens assembly 1222a and the second lens assembly 1222b. For example, the fifth magnet 1252b may be seated on the outer surface of the second lens assembly 1222b. The fourth magnet 1252a may be seated on the outer surface of the first lens assembly 1222a. In the specification, the first lens assembly 1222a may be used interchangeably with "first bobbin." The second lens assembly 1222b may be used interchangeably with "second bobbin."

The second housing 1230 may be disposed between the lens unit 1220 and the second shield can (not shown). In addition, the second housing 1230 may be disposed to surround the lens unit 1220.

The second housing 1230 may include a 2-1 housing 1231 and a 2-2 housing 1232. The 2-1 housing 1231 may be coupled to the first lens group 1221a and may also be coupled to the above-described first camera actuator. The 2-1 housing 1231 may be positioned in front of the 2-2 housing 1232.

In addition, the 2-2 housing 1232 may be positioned on a rear end of the 2-1 housing 1231. The lens unit 1220 may be seated inside the 2-2 housing 1232.

A hole may be formed in a side portion of the second housing 1230 (or the 2-2 housing 1232). The fourth coil 1251a and the fifth coil 1251b may be disposed in the hole. The hole may be positioned to correspond to the groove of the moving assembly 1222. In this case, a plurality of fourth coils 1251a and fifth coils 1251b may be provided.

In an embodiment, the second housing 1230 (in particular, the 2-2 housing 1232) may include a first side portion 1232a and a second side portion 1232b. The first side portion 1232a and the second side portion 1232b may be positioned to correspond to each other. For example, the first side portion 1232a and the second side portion 1232b may be disposed symmetrically with respect to the third direction. The second optical driving coil 1251 may be positioned on the first side portion 1232a and the second side portion 1232b. In addition, the second board unit 1270 may be seated on outer surfaces of the first side portion 1232a and the second side portion 1232b. In other words, a first board 1271 may be positioned on the outer surface of the first side portion 1232a, and a second board 1272 may be positioned on the outer surface of the second side portion 1232b.

Furthermore, the first guide unit G1 and the second guide unit G2 may be positioned on the first side portion 1232a and the second side portion 1232b of the second housing 1230 (in particular, the 2-2 housing 1232).

The first guide unit G1 and the second guide unit G2 may be positioned to correspond to each other. For example, the first guide unit G1 and the second guide unit G2 may be positioned opposite to each other with respect to the third direction (Z-axis direction). In addition, the first guide unit G1 and the second guide unit G2 may at least partially overlap each other in the second direction (Y-axis direction).

The first guide unit G1 and the second guide unit G2 may include at least one groove (e.g., a guide groove) or recess. In addition, a first ball B1 or a second ball B2 may be seated in the groove or the recess. Therefore, the first ball B1 or the second ball B2 may move in the third direction (Z-axis direction) in a guide groove of the first guide unit G1 or a guide groove of the second guide unit G2.

Alternatively, the first ball B1 or the second ball B2 may move in the third direction along a rail formed inside the first side portion 1232a of the second housing 1230 or a rail formed inside the second side portion 1232b of the second housing 1230.

Therefore, the first lens assembly 1222a and the second lens assembly 1222b may move in the third direction or the optical axis direction. At this time, the second lens assembly 1222b may be disposed adjacent or closer to the image sensor than the first lens assembly 1222a.

According to the embodiment, the first ball B1 may be in contact with the first lens assembly 1222a. The second ball B2 may be in contact with the second lens assembly 1222b. Therefore, at least a portion of the first ball B1 may overlap the second ball B2 in the first direction (X-axis direction) according to the position.

In addition, the first guide unit G1 and the second guide unit G2 may include first guide grooves GG1a and GG2a facing a first recess RS1. In addition, the first guide unit G1 and the second guide unit G2 may include second guide grooves GG1b and GG2b facing a second recess RS2. The first guide grooves GG1a and GG2a and the second guide grooves GG1b and GG2b may be grooves extending in the third direction (Z-axis direction). In addition, the first guide grooves GG1a and GG2a and the second guide grooves GG1b and GG2b may be different shapes of grooves. For example, the first guide grooves GG1a and GG2a may be grooves whose side surfaces are inclined, and the second guide grooves GG1b and GG2b may be grooves whose side surfaces are perpendicular to bottom surfaces.

In addition, a plurality of first guide grooves GG1a and GG2b or a plurality of second guide grooves GG1b and GG2b may be provided. In addition, a plurality of balls having at least some different diameters may be positioned in the plurality of guide grooves.

The fifth magnet 1252b may be positioned to face the fifth coil 1251b. In addition, the fourth magnet 1252a may be positioned to face the fourth coil 1251a.

For example, at least one of the fourth coil 1251a and the fifth coil 1251b may be composed of a plurality of coils. For example, the second optical driving coil 1251 may include a first sub-coil SC1 and a second sub-coil SC2. The first sub-coil SC1 and the second sub-coil SC2 may be disposed in the optical axis direction (Z-axis direction). For example, the first sub-coil SC1 and the second sub-coil SC2 may be disposed sequentially in the optical axis direction. In addition, the first sub-coil SC1 may be disposed closest to the first camera actuator among the first sub-coil SC1 and the second sub-coil SC2. In the embodiment, the second optical driving coil 1251 may include a first driving unit and a second driving unit. The first driving unit may provide a driving force for moving the first lens assembly 1222a in the optical axis direction. The first driving unit may include the fourth coil 1251a and the fourth magnet 1252a. In addition, the first driving unit may include a first driving coil and a first driving magnet. Therefore, the fourth coil 1251a is described by being used interchangeably with "first driving coil." In addition, the fourth magnet 1252a is described by being used interchangeably with "first driving magnet."

The second driving unit may provide a driving force for moving the second lens assembly 1222b in the optical axis direction. The second driving unit may include the fifth coil 1251b and the fifth magnet 1252b.

In addition, the second driving unit may include a second driving coil and a second driving magnet. Therefore, the fifth coil 1251b is described by being used interchangeably with "second driving coil." In addition, the fifth magnet 1252b is described by being used interchangeably with "second driving magnet."

Hereinafter, a description will be given based on this.

The elastic unit (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. In addition, the first elastic member (not shown) and the second elastic member (not shown) may be formed as leaf springs as described above. In addition, the first elastic member (not shown) and the second elastic member (not shown) may provide elasticity for the movement of the moving assembly 1222. However, the present disclosure is not limited to the positions described above, and the elastic unit may be disposed at various positions.

In addition, the second optical driving unit 1250 may provide a driving force for moving the lens unit 1220 in the third direction (Z-axis direction). The second optical driving unit 1250 may include the second optical driving coil 1251 and the second optical driving magnet 1252. The second optical driving coil 1251 and the second optical driving magnet 1252 may be positioned opposite to each other. For example, the first driving coil 1251a and the first driving magnet 1252a may be positioned to face each other. In addition, the second driving coil 1251b and the second driving magnet 1252b may be positioned to face each other. The first driving coil 1251a may be disposed on one side of the second housing in the second direction, and the second driving coil 1251a may be disposed on the other side of the second housing in the second direction.

Furthermore, the second optical driving unit 1250 may further include a second Hall sensor unit. The second Hall sensor unit 1253 may include at least one fourth Hall sensor 1253a and at least one fifth Hall sensor 1253b and may be positioned inside or outside the second optical driving coil 1251.

The moving assembly may move in the third direction (Z-axis direction) by the electromagnetic force formed between the second optical driving coil 1251 and the second optical driving magnet 1252.

The second optical driving coil 1251 may include the fourth coil 1251a and the fifth coil 1251b. In addition, as described above, the fourth coil 1251a and the fifth coil 1251b may be composed of a plurality of sub-coils. In addition, the fourth coil 1251a and the fifth coil 1251b may be disposed in the hole formed in the side portion of the second housing 1230. In addition, the fourth coil 1251a and the fifth coil 1251b may be electrically connected to the second board unit 1270. Therefore, the fourth coil 1251a and the fifth coil 1251b may receive a current or the like through the second board unit 1270.

In addition, the second optical driving coil 1251 may be coupled to the second board unit 1270 through a yoke or the like.

In addition, in the embodiment, the second optical driving coil 1251 is a fixed element together with the second board unit 1270. In contrast, the second optical driving magnet 1252 is a moving element moving in the optical axis direction (Z-axis direction) together with the first and second assemblies.

The second optical driving magnet 1252 may include the fourth magnet 1252a and the fifth magnet 1252b.

In addition, the fourth magnet 1252a may face a first sub-coil SC1a and a second sub-coil SC2a. The fifth magnet 1252b may face a third sub-coil SC1b and a fourth sub-coil SC2b. The first sub-coil SC1a may be positioned to overlap the third sub-coil SC1b in the second direction. The second sub-coil SC2a may be positioned to overlap the fourth sub-coil SC2b in the second direction. As described above, the fourth magnet 1252a and the fifth magnet 1252b may be disposed to face the two sub-coils in the same manner. In the specification, a description will be given based on the first sub-coils SC1a and SC1b and the second sub-coils SC2a and SC2b. However, in the specification, sub-coils for driving the second lens assembly may be referred to as "third sub-coil" and "fourth sub-coil."

The first driving coil 1251a may include the first sub-coil SC1a and the second sub-coil SC2a. In addition, the second driving coil 1251b may include the third sub-coil SC1b and the fourth sub-coil SC2b.

In addition, the first sub-coil SC1a and the second sub-coil SC2a may be disposed side by side in the optical axis direction (Z-axis direction). In addition, the first sub-coil SC1a and the second sub-coil SC2a may be disposed to be spaced apart from each other in the optical axis direction. The first sub-coil SC1a and the second sub-coil SC2a may be connected in parallel to each other. For example, one of one end and the other end of the first sub-coil SC1a may be connected to one of one end and the other end of the second sub-coil SC2a at a node. In addition, the other of the one end and the other end of the first sub-coil SC1a may be connected to the other of the one end and the other end of the second sub-coil SC2a at a different node. In other words, currents applied to the first sub-coil SC1a and the second sub-coil SC2a may be distributed to each sub-coil. Therefore, the first sub-coil SC1a and the second sub-coil SC2a may be electrically connected in parallel, thereby reducing heating.

In addition, a polarity of one surface of the first driving magnet 1252a facing the first driving coils SC1a and SC2a may be the same as a polarity of one surface of the second driving magnet 1252b facing the second driving coils SC1b and SC2b. For example, an inner surface of the first driving magnet 1252a and an inner surface of the second driving magnet 1252b may have one (e.g., an N pole) of an N pole and an S pole. An outer surface of the first driving magnet 1252a and an outer surface of the second driving magnet 1252b may have the other (e.g., S pole) of the N pole and the S pole. Here, the inner surface may be a side surface adjacent to the optical axis with respect to the optical axis, and the outer surface may be a side surface away from the optical axis.

In addition, the third sub-coil SC1b and the fourth sub-coil SC2b may be disposed side by side in the optical axis direction (Z-axis direction). In addition, the third sub-coil SC1b and the fourth sub-coil SC2b may be disposed to be spaced apart from each other in the optical axis direction.

The third sub-coil SC1b and the fourth sub-coil SC2b may be connected in parallel to each other. For example, one of one end and the other end of the third sub-coil SC1b may be connected to one of one end and the other end of the fourth sub-coil SC2b at a node.

The fourth magnet 1252a and the fifth magnet 1252b may be disposed in the above-described groove of the moving assembly 1222 and positioned to correspond to the fourth coil 1251a and the fifth coil 1251b. In addition, the second optical driving magnet 1252 may be coupled to the first and second lens assemblies (or the moving assemblies) together with the yoke to be described below.

In addition, the fourth magnet 1252a may have a first pole on a first face BSF1 facing the second optical driving coil (e.g., the fourth coil). In addition, the fourth magnet 1252a may have a second pole on a second face BSF2 opposite to the first face BSF1. The fifth magnet 1252b may have the first pole on the first face BSF1 facing the second optical driving coil (e.g., the fifth coil). In addition, the fifth magnet 1252b may have the second pole on the second face BSF2 opposite to the first face BSF1. The first pole may be one of the N pole and the S pole. In addition, the second pole may be the other of the N pole and the S pole.

The base unit 1260 may be positioned between the lens unit 1220 and the image sensor IS. A component such as a filter may be fixed to the base unit 1260. In addition, the base unit 1260 may be disposed to surround the above-described image sensor. With this configuration, the image sensor can be free from foreign substances and the like, thereby improving the reliability of the device. However, hereinafter, a description will be given after removing the image sensor in some drawings.

In addition, the second camera actuator 1200 may be a zoom actuator or an AF actuator. For example, the second camera actuator may support one or more lenses and perform an AF function or a zooming function by moving the lens according to a control signal of a predetermined control unit.

In addition, the second camera actuator may be a fixed zoom actuator or a continuous zoom actuator. For example, the second camera actuator may provide the movement of the lens group 1221.

In addition, the second camera actuator may be composed of a plurality of lens assemblies. For example, one or more of a third lens assembly (not shown) other than the first lens assembly 1222a and the second lens assembly 1222b and a guide pin (not shown) may be disposed in the second camera actuator. The above description may be applied to a description thereof. Therefore, the second camera actuator may perform a high-magnification zooming function through the second optical driving unit. For example, the first lens assembly 1222a and the second lens assembly 1222b may be moving lenses moving through the second optical driving unit and the guide pin (not shown), and the third lens assembly (not shown) may be a fixed lens but the present disclosure is not limited thereto. For example, the third lens assembly may perform a function of a focator by which light forms an image at a specific position, and the first lens assembly may perform a function of a variator for re-forming an image formed by the third lens assembly, which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the second lens assembly 1222b which is the variator. However, the configuration of the embodiment will be described with reference to the following drawings.

The image sensor may be positioned inside or outside the second camera actuator. In an embodiment, as shown, the image sensor may be positioned outside the second camera actuator. For example, the image sensor may be positioned on a circuit board. The image sensor may receive light and convert the received light into an electrical signal. In addition, the image sensor may have a plurality of pixels in an array form. In addition, the image sensor may be positioned on the optical axis.

The second board unit 1270 may be in contact with the second housing side portion. For example, the second board unit 1270 may be positioned on the second housing, in particular, the outer surface (first side surface) of the first side portion of the 2-2 housing and the outer surface (second side surface) of the second side portion of the 2-2 housing and may be in contact with the first side surface and the second side surface.

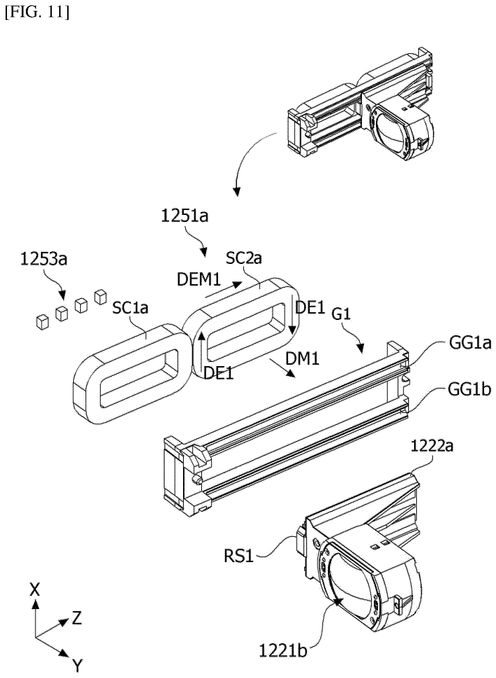

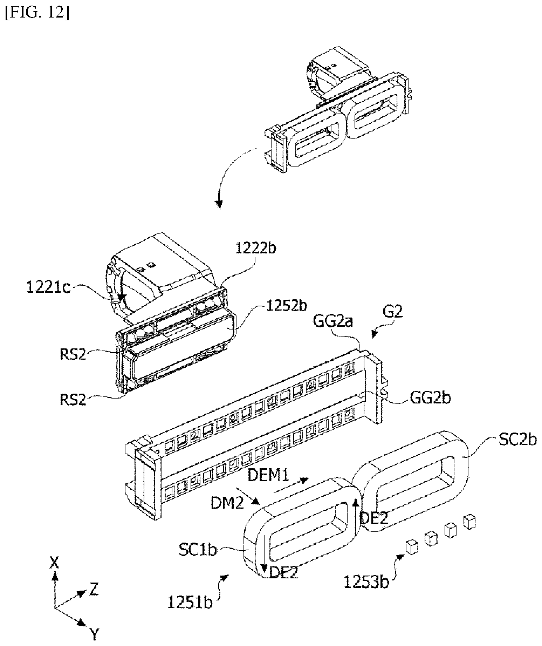

Referring to FIGS. 11 and 12, hereinafter, the electromagnetic force will be described below based on one coil. In the camera device according to the embodiment, by generating an electromagnetic force DEM1 between the fourth magnet 1252a and the fourth coil 1251a, the first lens assembly 1222a may move along a rail positioned on the inner surface of the housing through the first ball B1 in a direction parallel to the optical axis, that is, in the third direction (Z-axis direction) or the direction opposite to the third direction. At this time, the fourth magnet 1252a and the fifth magnet 1252b do not move to regions facing edges of the first and second sub-coils. Therefore, the electromagnetic force is formed based on the flow of current in adjacent regions of the first sub-coil and the second sub-coil.

Specifically, in the camera device according to the embodiment, the fourth magnet 1252a may be provided in the first lens assembly 1222a, for example, by a unipolar magnetization method. For example, in the embodiment, a face (first face) facing the outer surface of the fourth magnet 1252a may be the S pole. The outer surface of the fourth magnet 1252a may be a surface facing the fourth coil 1251a. A face opposite to the first face may be the N pole. Therefore, only one of the N pole and the S pole may be positioned to face the fourth coil 1251a. Here, a description will be given based on the fact that the outer surface of the fourth magnet 1252a is the S pole. Furthermore, the fourth coil 1251a may be composed of a plurality of sub-coils, and currents may flow in opposite directions in the plurality of sub-coils. In other words, in a region of the first sub-coil SC1a adjacent to the second sub-coil SC2a, the same current as "DE1" may flow.

In other words, a first region of the first sub-coil SC1a and a second region of the second sub-coil SC2a may have the same current direction. The first region of the first sub-coil SC1a is a region that overlaps the first driving magnet 1252a in a direction (second direction) perpendicular to the optical axis direction and is disposed perpendicular to the optical axis direction (e.g., disposed in the first direction). The second region of the second sub-coil Sc2a is a region that overlaps the first driving magnet 1252a in the direction (second direction) perpendicular to the optical axis direction and is disposed perpendicular to the optical axis direction (e.g., disposed in the first direction).

In addition, as shown, in the embodiment, when a magnetic force is applied from the S pole of the fourth magnet 1252a in the second direction (Y-axis direction) and a current DE1 flows from the fourth coil 1251a in the first direction (X-axis direction), an electromagnetic force DEM1 may act in the third direction (Z-axis direction) according to the interaction of the electromagnetic force (e.g., Fleming's left hand rule).

At this time, since the fourth coil 1251a is in a state of being fixed to the second housing side portion, the first lens assembly 1222a on which the fourth magnet 1252a is disposed may move in the direction opposite to the Z-axis direction by the electromagnetic force DEM1 according to the current direction. In other words, the second optical driving magnet may move in a direction opposite to the electromagnetic force applied to the second optical driving coil. In addition, the direction of the electromagnetic force may be changed depending on the current of the coil and the magnetic force of the magnet.

Therefore, the first lens assembly 1222a may move along the rail positioned on the inner surface of the housing through the first ball B 1 in the third direction or the direction (both directions) parallel to the optical axis direction. At this time, the electromagnetic force DEM1 may be controlled in proportion to the current DE1 applied to the fourth coil 1251a.

The first lens assembly 1222a or the second lens assembly 1222b may include the first recess RS1 in which the first ball B 1 is seated. In addition, the first lens assembly 1222a or the second lens assembly 1222b may include the second recess RS2 in which the second ball B2 is seated. A plurality of first recesses RS1 and second recesses RS2 may be provided. A length of the first recess RS1 may be preset in the optical axis direction (Z-axis direction). In addition, a length of the second recess RS2 may be preset in the optical axis direction (Z axis direction). Therefore, moving distances of the first ball B1 and the second ball B2 may be adjusted in the optical axis direction in each recess. In other words, the first recess RS1 or the second recess RS2 may function as a stopper for the first and second balls B1 and B2.

In addition, in the camera device according to the embodiment, the fifth magnet 1252b may be provided in the second lens assembly 1222b, for example, by a unipolar magnetization method.

The outer surface of the fourth magnet 1252a may be a surface facing the fourth coil 1251a. A face opposite to the first face may be the N pole. Therefore, only one of the N pole and the S pole may be positioned to face the fourth coil 1251a. Here, a description will be given based on the fact that the outer surface of the fourth magnet 1252a is the S pole. Furthermore, the fourth coil 1251a may be composed of a plurality of sub-coils, and currents may flow in opposite directions in the plurality of sub-coils. In other words, in a region of the first sub-coil SC1a adjacent to the second sub-coil SC2a, the same current as "DE1" may flow.

For example, in the embodiment, one of the N pole or the S pole of the fifth magnet 1252b may be positioned to face the fifth coil 1251b. In the embodiment, a face (first face) facing the outer surface of the fifth magnet 1252b may be the S pole. In addition, the first surface may be the N pole. Hereinafter, as shown, a description will be given based on the fact that the first face is the N pole.

Furthermore, the fifth coil 1251b may be composed of a plurality of sub-coils, and currents may flow in the plurality of sub-coils in opposite directions. In other words, in a region of the first sub-coil SC1b adjacent to the second sub-coil SC2b, the same current as "DE2" may flow.

In the embodiment, when a magnetic force DM2 is applied from the first face (N pole) of the fifth magnet 1252b in the second direction (Y-axis direction) and the current DE2 flows from the fifth coil 1251b corresponding the N pole in the first direction (X-axis direction), an electromagnetic force DEM2 may act in the third direction (Z-axis direction) according to the interaction of the electromagnetic force (e.g., Fleming's left hand rule).

At this time, since the fifth coil 1251b is a state of being fixed to the second housing side portion, the second lens assembly 1222b on which the fifth magnet 1252b is disposed may move in the direction opposite to the Z-axis direction by the electromagnetic force DEM2 according to the current direction. For example, as described above, the direction of the electromagnetic force may be changed depending on the current of the coil and the magnetic force of the magnet. Therefore, the second lens assembly 1222b may move along the rail positioned on the inner surface of the second housing through the second ball B2 in the direction parallel to the third direction (Z-axis direction). At this time, the electromagnetic force DEM2 may be controlled in proportion to the current DE2 applied to the fifth coil 1251b.

Referring to FIG. 13, in the camera device according to the embodiment, the second optical driving unit may provide driving forces F3A, F3B, F4A, and F4B for moving the first lens assembly 1222a and the second lens assembly 1222b of the lens unit 1220 in the third direction (Z-axis direction). As described above, the second optical driving unit may include the second optical driving coil 1251 and the second optical driving magnet 1252. In addition, the lens unit 1220 may move in the third direction (Z-axis direction) by the electromagnetic force formed between the second optical driving coil 1251 and the second optical driving magnet 1252.

At this time, the fourth coil 1251a and the fifth coil 1251b may be disposed in the holes formed in the side portions (e.g., the first side portion and the second side portion) of the second housing 1230. In addition, the fifth coil 1251b may be electrically connected to the first board 1271. The fourth coil 1251a may be electrically connected to the second board 1272. Therefore, the fourth coil 1251a and the fifth coil 1251b may receive a driving signal (e.g., a current) from a driving driver on the circuit board of the circuit board 1300 through the second board unit 1270.

At this time, the first lens assembly 1222a on which the fourth magnet 1252a is seated may move in the third direction (Z-axis direction) by the electromagnetic forces F3A and F3B between the fourth coil 1251a and the fourth magnet 1252a. In addition, the second lens group 1221b seated on the first lens assembly 1222a may also move in the third direction.

In addition, the second lens assembly 1222b on which the fifth magnet 1252b is seated may move in the third direction (Z-axis direction) by the electromagnetic forces F4A and F4B between the fifth coil 1251b and the fifth magnet 1252b. In addition, the third lens group 1221c seated on the second lens assembly 1222b may also move in the third direction.

Therefore, as described above, the focal length or magnification of the optical system may be changed by moving the second lens group 1221b and the third lens group 1221c. In an embodiment, the magnification may be changed by moving the second lens group 1221b. In other words, zooming may be performed. In addition, the focus may be adjusted by moving the third lens group 1221c. In other words, an AF function may be performed. With this configuration, the second camera actuator may be a fixed zoom actuator or a continuous zoom actuator.

Furthermore, the fourth Hall sensor 1253a and the fifth Hall sensor 1253b may be disposed on at least one of the first sub-coil and the second sub-coil. For example, the fourth Hall sensor 1253a and the fifth Hall sensor 1253b may also overlap in the second direction. Alternatively, the fourth Hall sensor 1253a and the fifth Hall sensor 1253b may not overlap in the second direction. Alternatively, the fourth Hall sensor 1253a and the fifth Hall sensor 1253b may partially overlap in the second direction.

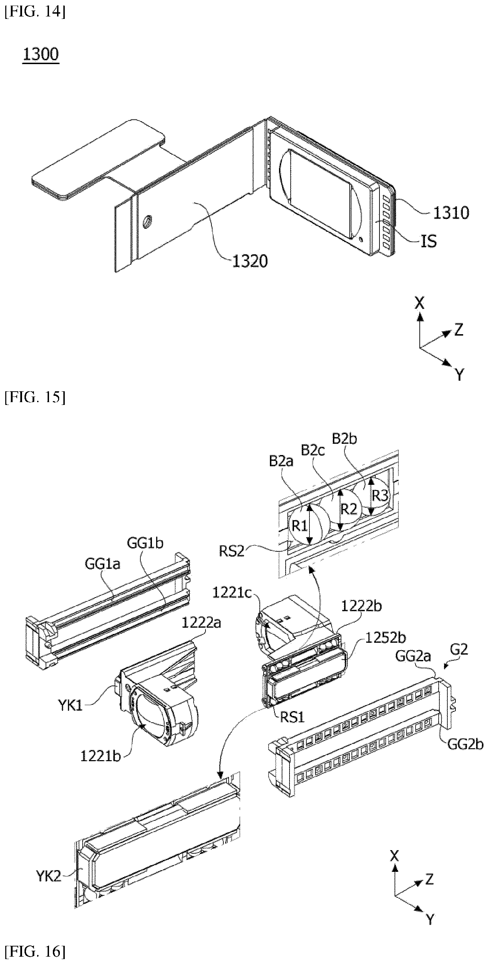

FIG. 14 is a schematic diagram showing a circuit board according to an embodiment.

Referring to FIG. 14, as described above, the circuit board 1300 according to the embodiment may include a first circuit board unit 1310 and a second circuit board unit 1320. The first circuit board unit 1310 may be positioned under and coupled to the base. In addition, the image sensor IS may be disposed on the first circuit board unit 1310. In addition, the first circuit board unit 1310 and the image sensor IS may be electrically connected.

In addition, the second circuit board unit 1320 may be positioned on a side portion of the base. In particular, the second circuit board unit 1320 may be positioned on a first side portion of the base. Therefore, the second circuit board unit 1320 may be positioned adjacent to the fourth coil positioned adjacent to the first side portion so that electrical connection may be easily made.

Furthermore, the circuit board 1300 may further include a fixed board (not shown) positioned on a side surface thereof. Therefore, even when the circuit board 1300 is made of a flexible material, the circuit board 1300 may be coupled to the base while maintaining stiffness by the fixed board.

The second circuit board unit 1320 of the circuit board 1300 may be positioned on a side portion of the second optical driving unit 1250. The circuit board 1300 may be electrically connected to the first optical driving unit and the second optical driving unit. For example, the electrical connection may be made by the SMT. However, the present disclosure is not limited to this method.

The circuit board 1300 may include a circuit board having line patterns that may be electrically connected, such as an RPCB, an FPCB, and an RFPCB. However, the present disclosure is not limited to these types.

In addition, the circuit board 1300 may be electrically connected to another camera module in the terminal or a processor of the terminal. Therefore, the camera actuator and the camera device including the camera actuator described above may transmit and receive various signals within the terminal.

FIG. 15 is a perspective view of some components of the second camera actuator according to the embodiment.

Referring to FIG. 15, the first lens assembly 1222a and the second lens assembly 1222b may be disposed to be spaced apart from each other in the optical axis direction (Z-axis direction). In addition, the first lens assembly 1222a and the second lens assembly 1222b may move in the optical axis direction (Z-axis direction) by the second optical driving unit. For example, an AF or zooming function may be performed by moving the first lens assembly 1222a and the second lens assembly 1222b.

In addition, the first lens assembly 1222a may include a first lens holder LAH1 holding and coupling the second lens group 1221b. The first lens holder LAH1 may be coupled to the second lens group 1221b. In addition, the first lens holder LAH1 may include a first lens hole LH1 for accommodating the second lens group 1221b. In other words, the second lens group 1221b including at least one lens may be disposed in the first lens hole LH1. The first guide unit G1 may be disposed to be spaced apart from one side of the first lens holder LAH1. For example, the first guide unit G1 and the first lens holder LAH1 may be sequentially disposed in the second direction (Y-axis direction).

The second lens assembly 1222b may include a second lens holder LAH2 holding and coupling the third lens group 1221c. In addition, the second lens holder LAH2 may include a second lens hole LH2 for accommodating the third lens group 1221c. In addition, at least one lens may be disposed in the second lens hole LH2.

The second guide unit G2 may be disposed on the other side of the second lens holder LAH2. The second guide unit G2 may be disposed opposite to the first guide unit G1.

In an embodiment, the first guide unit G1 and the second guide unit G2 may at least partially overlap in the second direction (Y-axis direction). With this configuration, it is possible to space efficiency of the second optical driving unit for moving the first and second lens assemblies in the second camera actuator, thereby easily miniaturing the second camera actuator.

In addition, the second guide unit G2 and the second lens holder LAH2 may be sequentially disposed in the direction opposite to the second direction (Y-axis direction).

As described above, the first ball, the fourth coil, and the like may be disposed in the first guide unit G1, and as described above, the second ball, the fifth coil, and the like may be disposed in the second guide unit G2.

In addition, according to the embodiment, each of the first and second lens assemblies 1222a and 1222b may include yokes YK1 and YK2 disposed on the side surfaces thereof.

The first yoke YK1 may be positioned on a side surface of the first lens assembly 1222a. The second yoke YK2 may be positioned on a side surface of the second lens assembly 1222b. At least some of the first yoke YK1 and the second yoke YK2 may extend outward. Therefore, the first yoke YK1 may surround at least a portion of a side surface of the fourth magnet 1252a. As shown, the first yoke YK1 may be formed in various structures surrounding the inner surface and a portion of the side surface of the fourth magnet 1252a. For example, the first yoke YK1 may be composed of divided members, and each divided member may be positioned on the inner surface and side surface of the fourth magnet 1252a. Therefore, it is possible to improve a coupling force between the second optical driving magnet magnetized in a unipolar fashion and the yoke. Likewise, the second yoke YK2 may surround at least a portion of a side surface of the fifth magnet 1252b. As shown, the second yoke YK2 may be formed in various structures surrounding the inner surface and a portion of the side surface of the fifth magnet 1252b. For example, the second yoke YK2 may be composed of divided members, and each divided member may be positioned on the inner surface and the side surface of the fifth magnet 1252b.

Furthermore, the yokes may be positioned to be coupled to the second optical driving coil as well as the second optical driving magnet.

In addition, a plurality of balls may be positioned on the outer surface of the lens assembly. As described above, the first ball B1 may be positioned on the outer surface of the first lens assembly 1222a. The second ball B2 may be positioned on the outer surface of the second lens assembly 1222b.

A plurality of first balls B1 and second balls B2 may be provided. For example, the plurality of first balls B1 may be disposed side by side in one recess of the first lens assembly 1222a in the optical axis direction (Z-axis direction). In addition, the plurality of second balls B2 may be disposed side by side in one recess of the second lens assembly 1222b in the optical axis direction (Z-axis direction).

For example, the second ball B2 may include a first sub-ball B2a, a second sub-ball B2b, and a third sub-ball B2c. The first sub-ball B2a, the second sub-ball B2b, and the third sub-ball B2c may be disposed side by side in the optical axis direction. Therefore, the first sub-ball B2a, the second sub-ball B2b, and the third sub-ball B2c may at least partially overlap each other in the optical axis direction.

In addition, the first sub-ball B2a and the second sub-ball B2b may be positioned at outer sides among the plurality of balls. The third sub-ball B2c may be positioned between the first sub-ball B2a and the second sub-ball B2b.

The plurality of balls may have the same diameter or different diameters. For example, at least some of the first sub-ball B2a, the second sub-ball B2b, and the third sub-ball B2c may have the same diameters R1, R3, and R2. In addition, the first sub-ball B2a, the second sub-ball B2b, and the third sub-ball B2c may have different diameters R1, R3, and R2.

In an embodiment, the diameters R1 and R3 of the balls (first and second sub-balls) positioned at the outer sides may be smaller than the diameter R2 of the ball (third sub-ball) positioned at an inner side among the plurality of balls. For example, the diameters R1 and R3 of the first sub-ball B2a and the second sub-ball B2b may be smaller than the diameter R2 of the third sub-ball B2c. With this configuration, the lens assembly may be accurately moved by the plurality of balls without tilting to one side.

In addition, as described above, a plurality of second optical driving magnets may be provided and composed of the fourth magnet and the fifth magnet. In addition, the fourth magnet and the fifth magnet may be opposite to each other, and the same pole may be disposed outside. In other words, the first face (outer surface) of the fourth magnet and the first face (outer surface) of the fifth magnet may have the first pole. In addition, the second face (inner surface) of the fourth magnet and the second face (inner surface) of the fifth magnet may have the second pole.

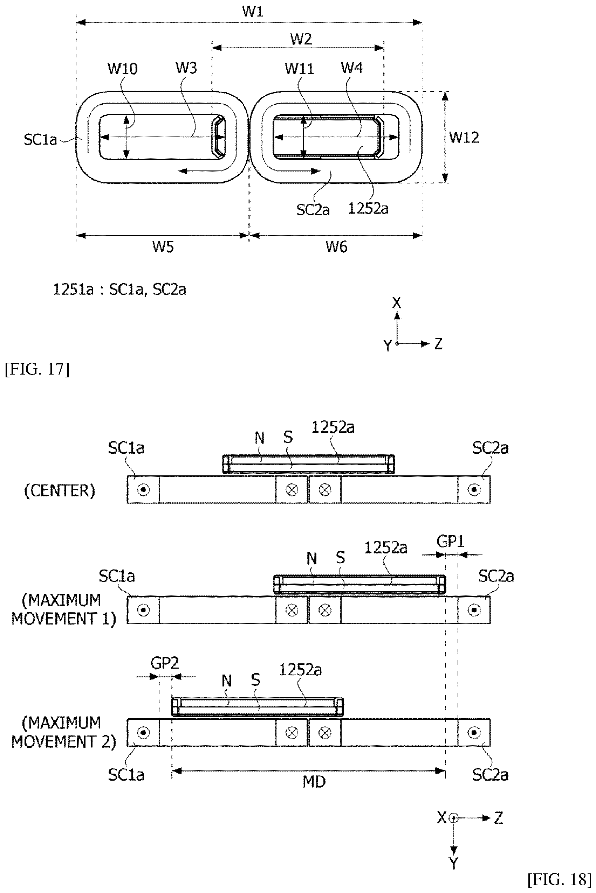

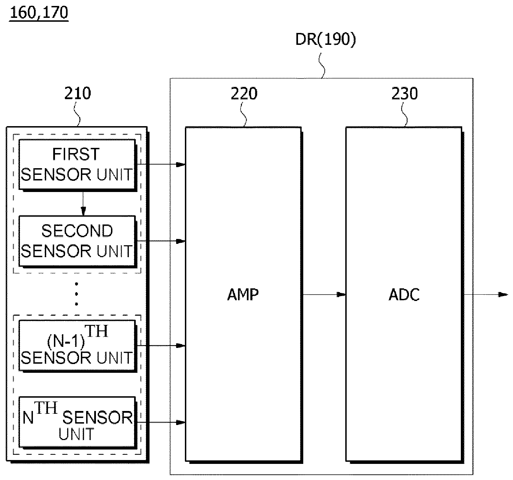

FIG. 16 is a view showing a second optical driving coil, a second optical driving magnet, and a yoke according to an embodiment, FIG. 17 is a view describing the movement of the second optical driving magnet by a second driving unit according to an embodiment, and FIG. 18 is a view showing the movement of second and third lens assemblies according to an embodiment.

Referring to FIGS. 16 to 18, a length W5 of the first sub-coil SC1a in the optical axis direction (Z-axis direction) may be the same as a length W6 of the second sub-coil SC2a in the optical axis direction (Z-axis direction). With this configuration, driving force control may easily be performed by the first sub-coil SC1a and the second sub-coil SC2a.

In addition, a total length W1 (or a maximum length) of the second optical driving coil in the optical axis direction (Z-axis direction) may be greater than a length W2 (maximum length W2) of the second optical driving magnet 1252a in the optical axis direction (Z-axis direction). With this configuration, a stroke may be maximally performed by the second optical driving magnet. Furthermore, a long stroke may be performed by the second optical driving magnet of unipolar magnetization.

In addition, in an embodiment, a maximum moving distance MD of the first lens assembly in the optical axis direction may be greater than a length W10 of a hole (or a hollow) of the first sub-coil SC1a in a short axis direction (first direction) and may be smaller than or equal to a length W3 of a hole (or a hollow) of the first sub-coil SC1a in a long axis direction (optical axis direction or third direction).

In addition, the maximum moving distance MD of the first lens assembly may be greater than a length of a hole (or hollow) of the second sub-coil SC2a in the short axis direction (first direction) and smaller than or equal to a length W4 of the hole (or hollow) of the second sub-coil SC2a in the long axis direction (optical axis direction or third direction).

In addition, in an embodiment, a maximum moving distance MD3 of the second lens assembly in the optical axis direction may be greater than a length of a hole (or hollow) of the third sub-coil SC1b in the short axis direction (first direction) and smaller than or equal to the length of the hole (or hollow) of the third sub-coil SC1b in the long axis direction (optical axis direction or third direction).

In addition, the maximum moving distance MD3 of the second lens assembly may be greater than the length of the hole (or hollow) of the fourth sub-coil SC2b in the short axis direction (first direction) and smaller than or equal to the length of the hole (or hollow) of the fourth sub-coil SC2b in the long axis direction (optical axis direction or third direction).

Furthermore, the length W3 of an inner hole of the first sub-coil SC1a in the optical axis direction may be the same as the length W4 of an inner hole of the second sub-coil SC2a in the optical axis direction.

In addition, the length W2 of the driving magnet 1252a in the optical axis direction (Z-axis direction) may be greater than the length W3 of the inner hole of the first sub-coil SC1a in the optical axis direction. In addition, the length W2 of the driving magnet 1252a in the optical axis direction (Z-axis direction) may be greater than the length W4 of the inner hole of the second sub-coil SC2a in the optical axis direction. Therefore, the second optical driving magnet may move in the optical axis within the entire length of the second optical driving coil in the optical axis direction.

A maximum length (or width, W11) of the first driving magnet in the short axis direction (or the first direction) may be smaller than a maximum length (or width, W12) of the first driving coil in the short axis direction (or first direction). In this case, the maximum length of the first driving coil in the short axis direction (or the first direction) may correspond to a distance between outermost circumferences of the first driving coil separated in the first direction.

In addition, in an embodiment, the hollow (or hole) of one coil of the second optical driving coil may have a length in the optical axis direction greater than a length in the short axis direction or the first direction. For example, the length W3 of the hole (or hollow) of the first sub-coil SC1a in the long axis direction (optical axis direction or third direction) may be greater than the length W10 of the hole (or the hollow) of the first sub-coil SC1a in the short axis direction. In addition, a horizontal length (or a width) of the hollow of the sub-coil may be greater than a vertical length (or a length).

In addition, the length W2 of the second optical driving magnet (or the first and second driving magnets) in the optical axis direction (Z-axis direction) may be greater than the lengths W3 and W4 of one of the hollows (or the holes) of each sub-coil (first sub-coil to fourth sub-coil) in the optical axis direction.

The length W2 of the second optical driving magnet (or the first and second driving magnets) in the optical axis direction (Z-axis direction) may be smaller than a length or a range W7 from one side the inner hole of the first sub-coil SC1a to the other side of the inner hole of the second sub-coil SC2a. Here, one side and the other side of the sub coil refer to ends in opposite directions in the optical axis direction.

The length W2 of the second optical driving magnet (or the first and second driving magnets) in the optical axis direction (Z-axis direction) may be smaller than a length or a range W8 from one side of the inner hole of the first sub-coil SC1a to one side of the inner hole of the second sub-coil SC2a.

Furthermore, the length W2 of the second optical driving magnet (or the first and second driving magnets) in the optical axis direction (Z-axis direction) may be smaller than a length or a range W9 from one side of the inner hole of the first sub-coil SC1a to one side of the inner hole of the second sub-coil SC2a.

The length W2 (maximum length) of the second optical driving magnet in the optical axis direction (Z-axis direction) may be smaller than the length W5 of the first sub-coil SC1a in the optical axis direction (Z-axis direction).

With this configuration, no counter electromotive force is generated in the movement of the lens assembly in the optical axis direction, and a long stroke can be implemented.

The length (maximum length, W2) of the second optical driving magnet (or the first and second driving magnets) in the optical axis direction (Z-axis direction) may be 0.6 times or less the maximum length W1 of the corresponding first driving coil in the optical axis direction. Preferably, the length (maximum length, W2) of the second optical driving magnet (or the first and second driving magnets) in the optical axis direction (Z-axis direction) may be 0.55 times or less the maximum length W1 of the corresponding first driving coil in the optical axis direction. More preferably, the length (maximum length, W2) of the second optical driving magnet (or the first and second driving magnets) in the optical axis direction (Z-axis direction) may be 0.5 times or less the maximum length W1 of the corresponding first driving coil in the optical axis direction. Therefore, the camera device can provide the long stroke in a state in which the counter electromotive force is minimized.

The maximum moving distance MD of the first lens assembly in the optical axis direction may be smaller than the length (maximum length, W2) of the second optical driving magnet (or the first and second driving magnets) in the optical axis direction (Z-axis direction). For example, the maximum moving distance MD of the first lens assembly in the optical axis direction may be in the range of 0.66 times or more or 0.92 times or less the length (maximum length, W2) of the second optical driving magnet (or the first and second driving magnets) in the optical axis direction (Z-axis direction). Preferably, the maximum moving distance MD of the first lens assembly in the optical axis direction may be in the range of 0.7 times or more or 0.9 times or less the length (maximum length, W2) of the second optical driving magnet (or the first and second driving magnets) in the optical axis direction (Z-axis direction). More preferably, the maximum moving distance MD of the first lens assembly in the optical axis direction may be in the range of 0.74 times or more or 0.88 times or less the length (maximum length, W2) of the second optical driving magnet (or the first and second driving magnets) in the optical axis direction (Z-axis direction). Therefore, it is possible to maximally suppress the generation of the counter electromotive force.

In addition, in an embodiment, the total length W1 (or the maximum length) of the second optical driving coil in the optical axis direction (Z-axis direction) may be in the range of 18 mm to 20 mm. Furthermore, the length W2 of the second optical driving magnet in the optical axis direction (Z-axis direction) may be in the range of 8 mm to 12 mm. In addition, the length W3 of the hole (or the hollow) of the first sub-coil SC1a in the long axis direction (optical axis direction or third direction) may be in the range of 5.6 mm to 8.7 mm. In addition, the length W4 of the hole (or the hollow) of the second sub-coil SC2a in the long axis direction (optical axis direction or third direction) may be in the range of 5.6 mm to 8.7 mm.

The length W5 of the first sub-coil SC1a in the optical axis direction (Z-axis direction) may be in the range of 8 mm to 10 mm. However, as described above, the length W5 of the first sub-coil SC1a in the optical axis direction (Z-axis direction) may be greater than or equal to the length W2 of the second optical driving magnet in the optical axis direction (Z-axis direction).

In addition, the length W6 of the second sub-coil SC2a in the optical axis direction (Z-axis direction) may be in the range of 8 mm to 10 mm. However, as described above, the length W5 of the second sub-coil SC2a in the optical axis direction (Z-axis direction) may be greater than or equal to the length W2 of the second optical driving magnet in the optical axis direction (Z-axis direction).

The length W7 from the one side of the inner hole of the first sub-coil SC1a to the other side of the inner hole of the second sub-coil SC2a may be in the range of 13.6 mm to 20.7 mm.

The length or range W8 from the one side of the inner hole of the first sub coil SC1a to one side of the inner hole of the second sub coil SC2a may be in the range of 8 mm to 12 mm. In addition, the length or range W8 from the one side of the inner hole of the first sub-coil SC1a to one side of the inner hole of the second sub-coil SC2a may be greater than or equal to the length W2 of the second optical driving magnet in the optical axis direction (Z-axis direction).

The length or range W9 from the one side of the inner hole of the first sub-coil SC1a to the one side of the inner hole of the second sub-coil SC2a may be in the range of 8 mm to 12 mm. The length or range W9 from the one side of the inner hole of the first sub-coil SC1a to the one side of the inner hole of the second sub-coil SC2a may be greater than or equal to the length W2 of the second optical driving magnet in the optical axis direction (Z-axis direction).

In addition, according to the unipolar magnetization of the second optical driving magnet, currents may flow in the first sub-coil SC1a and the second sub-coil SC2a in different directions. For example, the current may flow in one of clockwise and counterclockwise directions in the first sub-coil SC1a, and the current may flow in the other of the clockwise and counterclockwise directions in the second sub-coil SC2a.

Furthermore, the length W2 of the second optical driving magnet in the optical axis direction (Z-axis direction) may be greater than the moving distances MD2 and MD3 of the lens assembly in the optical axis direction. In other words, the length W2 of the second optical driving magnet in the optical axis direction (Z-axis direction) may be greater than the maximum moving distance of the first lens assembly or the maximum moving distance of the second lens assembly. With this configuration, a driving force for the movement in the optical axis direction can be safely provided.

The second optical driving magnet (e.g., the fourth magnet 1252a) may move in the range W7 from the one side of the inner hole of the first sub-coil SC1a to the other side of the inner hole of the second sub-coil SC2a in the optical axis direction (Z-axis direction). In other words, the second optical driving magnet may move in the optical axis direction of the hole in the second optical driving coil within the maximum range MD in the optical axis direction.

In addition, as described above, a plurality of lens assemblies may be provided, and a lens assembly disposed on a rear end among the plurality of lens assemblies may have a greater moving distance in the optical axis direction than a lens assembly disposed on a front end among the plurality of lens assemblies.

For example, the moving distance MD2 of the first lens assembly 1222a in the optical axis direction (Z-axis direction) may be smaller than the moving distance MD3 of the second lens assembly 1222b in the optical axis direction (Z-axis direction). In other words, the moving distance of the second lens assembly 1222b in the optical axis direction may be greater than the moving distance of the first lens assembly 1222a in the optical axis direction. The first lens assembly 1222a may be positioned on a front end of the second lens assembly 1222b.

In addition, in the camera actuator according to the embodiment, the second optical driving magnet 1252a may move from "center" to "maximum movement 1" or "maximum movement 2." Here, in the case of "center," the second optical driving magnet 1252a may overlap the first sub-coil SC1a and the second sub-coil SC2a in the second direction. In other words, both of the first sub-coil SC1a and the second sub-coil SC2a may face the second optical driving magnet.

In addition, since the first sub-coil SC1a and the second sub-coil SC1b are coils extending in the first direction actually providing the driving force by the electromagnetic force, the region where the first sub-coil SC1a and the second optical driving magnet 1252a overlap may be the same as the region where the second sub-coil SC2a and the second optical driving magnet 1252a overlap. Therefore, it is possible to minimize the generation of the counter electromotive force, thereby implementing the long stroke.

In addition, "maximum movement 1" may correspond to a case in which the second optical driving magnet 1252a maximally moves in the direction opposite to the third direction (Z-axis direction). In this case, the second optical driving magnet 1252a may have a region overlapping the first sub-coil SC1a greater than a region overlapping the second sub-coil SC2a. Furthermore, at least a portion of the second optical driving magnet 1252a may overlap the inner hole of the first sub-coil SC1a. More specifically, the second optical driving magnet 1252a may be spaced a predetermined separation distance GP2 from the edge of the inner hole of the first sub-coil SC1a in the optical axis direction. With this configuration, it is possible to reduce the counter electromotive force generated on the end of the first sub-coil SC1a. For example, the second optical driving magnet 1252a may move to a region not overlapping the end of the first sub-coil SC1a in the direction opposite to the optical axis direction in the second direction (Y-axis direction) with a maximum stroke.

In addition, "maximum movement 2" may correspond to a case in which the second optical driving magnet 1252a maximally moves in the third direction (Z-axis direction). In this case, the second optical driving magnet 1252a may have a region overlapping the second sub-coil SC2a greater than a region overlapping the first sub-coil SC1a. Furthermore, at least a portion of the second optical driving magnet 1252a may overlap the inner hole of the second sub-coil SC2a. More specifically, the second optical driving magnet 1252a may be spaced the predetermined separation distance GP1 from the edge of the inner hole of the second sub-coil SC2a in the optical axis direction. With this configuration, it is possible to reduce the counter electromotive force generated on the end of the second sub-coil SC2a. For example, the second optical driving magnet 1252a may move to a region not overlapping the end of the second sub-coil SC2a in the optical axis direction in the second direction (Y-axis direction) with a maximum stroke.

Therefore, even when the length of the second optical driving magnet 1252a in the direction of the optical axis is small, it is possible to efficiently implement the long stroke of the camera actuator through the unipolar magnetization and the current directions of the plurality of second optical driving coils.

In addition, the maximum moving distance of the second optical driving magnet 1252a may correspond to the lengths of the first and second recesses accommodating the first ball or the second ball in the first lens assembly described above in the optical axis direction. In addition, the maximum moving distance of the second optical driving magnet 1252a may correspond to a moving distance of the second optical driving magnet 1252a from the maximum movement 1 to the maximum movement 2 in the optical axis direction (Z-axis direction). Alternatively, the maximum moving distance of the second optical driving magnet 1252a may correspond to a distance between stoppers for restricting the movement of the first ball or the second ball in the optical axis direction. Alternatively, the maximum moving distance of the second optical driving magnet 1252a is a maximum distance that the bobbin may move and may correspond to the separation distance in the optical axis direction between a stopper positioned in the optical axis direction with respect to the bobbin and a stopper positioned in the direction opposite to the optical axis direction.

In addition, the maximum moving distance of the second optical driving magnet 1252a may correspond to twice the distance moving from the center to the maximum movement 1. In addition, the moving distance of the second optical driving magnet 1252a according to the embodiment may be in the range of -4 mm to +4 mm with respect to the center. Specifically, the moving distance of the second optical driving magnet 1252a may be in the range of -3.8 mm to +3.8 mm with respect to the center. More specifically, the moving distance of the second optical driving magnet 1252a may be in the range of -3.5 mm to +3.5 mm with respect to the center. Here, the moving distance from the center in the optical axis direction is denoted by "+," and a direction opposite to the optical axis direction is denoted by "- ." Therefore, the second optical driving magnet 1252a (or at least one of the first lens assembly and the second lens assembly) according to the embodiment may move in the range of 0 mm to 12 mm in the optical axis direction. In addition, the maximum moving distance described above may correspond to the maximum stroke of the lens assembly in the camera module.

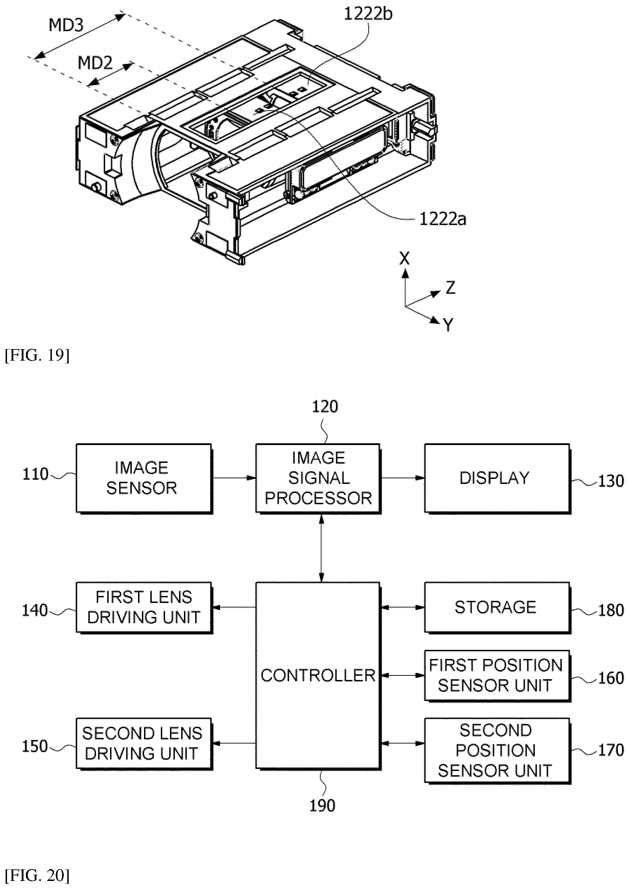

FIG. 19 is a block diagram showing a configuration of a camera device according to an embodiment of the present disclosure, and FIG. 20 is a block diagram showing a detailed configuration of a position sensor unit in FIG. 12.

Referring to FIG. 19, the camera device may include an image sensor 110, an image signal processor 120, a display 130, a first lens driving unit 140, a second lens driving unit 150, and a first position sensor unit 160, a second position sensor unit 170, a storage 180, and a controller 190.

As described above, the image sensor 110 processes an optical image of a subject formed through a lens. To this end, the image sensor 110 may preprocess an image acquired through the lens. In addition, the image sensor 110 may convert the preprocessed image into electrical data and output the electrical data.

The image sensor 110 corresponds to the image sensor IS. In addition, the image sensor 110 is a form in which a plurality of photo-detectors are integrated as each pixel and converts image information of the subject into electrical data and outputs the converted image information. The image sensor 110 accumulates the amount of input light and outputs an image captured by the lens according to the amount of accumulated light according to a vertical synchronization signal. At this time, the image is acquired by the image sensor 110 for converting light reflected from the subject into an electrical signal. Meanwhile, in order to obtain a color image using the image sensor 110, a color filter is required, and for example, a color filter array (CFA) filter may be adopted. The CFA filter transmits only light representing one color per pixel, has a regularly arranged structure, and has various forms depending on the arrangement structure.

The image signal processor 120 processes an image output through the image sensor 110 in a unit of frame. At this time, the image signal processor 120 may also be referred to as an "image signal processor (ISP)."

At this time, the image signal processor 120 may include a lens shading compensator (not shown). The lens shading compensator is a block for compensating for a lens shading phenomenon that appears differently in the amount of light in the center and edge regions of the image, and receives a lens shading setting value from the controller 190 to be described below and adjusts colors of the center and edge regions of the image.

Furthermore, the lens shading compensator may receive shading variables set differently according to types of lighting and also process the lens shading of the image according to the received variables. Therefore, the lens shading compensator may perform the lens shading process by differently applying a degree of shading according to the types of lighting. Meanwhile, the lens shading compensator may receive shading variables set differently according to an automatic exposure weight applied to a specific region of the image in order to prevent a saturation phenomenon occurring in the image and process the lens shading of the image according to the received variables. More specifically, the lens shading compensator compensates for a brightness change occurring in the edge region of the image signal as the automatic exposure weight is applied to the center region of the image signal. In other words, when the saturation of the image signal is caused by lighting, an intensity of light is reduced from the center to the periphery in a concentric circle shape, and thus the lens shading compensator amplifies the edge signal of the image signal to compensate for the brightness as compared to the center.

Meanwhile, the image signal processor 120 may measure the sharpness of the image acquired through the image sensor 110. In other words, the image signal processor 120 may measure the sharpness of the image in order to check the focal accuracy of the image acquired through the image sensor 110. Sharpness may be measured for each image acquired according to a position of a focus lens.

The display 130 displays a captured image under the control of the controller 190 to be described below and displays a setting screen required for taking a photo or a screen for selecting an operation by a user. This may also be provided to another mobile terminal or portable terminal.

The first lens driving unit 140 may correspond to the first optical driving unit 1140 (see FIG. 4). In other words, the first lens driving unit 140 may perform the electromagnetic interaction between the third to fifth coils and the third to fifth magnets in response to the control signal received from the controller 190. In addition, an OIS function can be performed by this interaction.

The second lens driving unit 150 may correspond to the second optical driving unit 1250 (see FIG. 8). In other words, the second lens driving unit 150 may perform the electromagnetic interaction between the first and second coils and the first and second magnets in response to the control signal received from the controller 190. In addition, a zooming or AF function may be performed by this interaction.

For example, the focus lens may be moved in the optical axis direction.

The first position sensor unit 160 includes a plurality of Hall sensors of the first camera actuator described above, and thus detects the position of the mover or the optical member. In other words, the first position sensor unit 160 may detect the position of the first optical driving unit disposed on the mover. This is to control the position of the first mover or the optical member. In addition, the first position sensor unit 160 provides position data for moving the mover or the optical member.

The second position sensor unit 170 includes a plurality of Hall sensors of the second camera actuator described above, and thus detects the position of the lens assembly, the driving magnet, or the lens unit 1220 (see FIG. 9). In other words, the second position sensor unit 170 may detect the position of the second optical driving unit adjacent to the lens unit 1220. This is to control the position of the lens unit. In addition, the second position sensor unit 170 provides position data for moving the lens unit.

The storage 180 stores data necessary for the operation of the camera device. In particular, information on the zoom position and focus position for each distance to the subject may be stored in the storage 180. In other words, the focus position may be a position of the focus lens for accurately focusing the subject. In addition, the focus position may vary depending on the zoom position of the zoom lens and the distance to the subject. Therefore, the storage 180 stores data on the zoom position according to the distance and the focus position corresponding to the zoom position.

The controller 190 controls the overall operations of the camera device. In particular, the controller 190 may control the first position sensor unit 160 and the second position sensor unit 170 to provide an AF function. Furthermore, the controller 190 may include a driver DR to be described below. In addition, as described above, the driving unit may detect the position of the driving magnet from the Hall sensor and provide a current to the driving coil. In other words, in the camera device or the lens driving device, the driving unit may include the controller 190 and the first and second lens driving units.

The controller 190 controls the first position sensor unit 160 to detect the position of the mover or the optical member. The controller 190 controls the first position sensor unit 160 to detect a current position of the mover or the optical member in order to move the mover or the optical member to a target position.

In addition, when the current position of the mover or the optical member is detected through the first position sensor unit 160, the controller 190 supplies a control signal for moving the mover or the optical member to the target position based on the current position of the mover or the optical member to the first lens driving unit 140.

In addition, the controller 190 controls the second position sensor unit 170 to detect the position of the lens unit. The controller 190 controls the second position sensor unit 170 to detect the current position of the lens unit in order to move the lens unit to the target position.

In addition, when the current position of the lens unit is detected through the second position sensor unit 170, the controller 190 may supply the control signal for moving the lens unit to the target position based on the current position of the lens unit to the second lens driving unit 150.

At this time, differential signals of detection signals detected from the plurality of sensors constituting each sensor unit through the first position sensor unit 160 and the second position sensor unit 170 may be input to the controller 190.

In the present disclosure, each of the first position sensor unit 160 and the second position sensor unit 170 includes a plurality of sensors (corresponding to "Hall sensor" described above). In addition, the plurality of sensors perform a detection operation at each installation position. In other words, the plurality of sensors may detect the position of the mover, the position of the lens unit, and the like. At this time, in the present disclosure, each of the positions of the mover or the optical member and the lens unit may be detected using the differential signals of detection signals acquired through the plurality of sensors.

At this time, each of the signals detected by the plurality of sensors is input to the controller 190, and thus the position of the mover, the optical member, the second lens assembly, or the driving magnet may be detected based on the differential signals of the detection signals.

However, in the case of the above structure, an amplifier and an analog-to-digital converter needs to be disposed in a predetermined sensor. In addition, the controller 190 may be provided with a plurality of connecting terminals connected to the analog-to-digital converter connected to the predetermined sensor.

In the present disclosure, digital data for the differential signal may be acquired at a front-end stage, and thus the acquired digital data may be input to the controller 190.

In other words, in the present disclosure, the digital data may be acquired from the first position sensor unit 160 and the second position sensor unit 170, and thus only the acquired digital data is input to the controller 190. Hereinafter, the second position sensor unit 170, the second lens driving unit 150, and the controller 190 (including a driver) will be described in detail.

The second position sensor units 170 may have the same configuration and thus may be each connected to the controller 190. The above description may also be applied to the first position sensor unit 160, but in particular, since the plurality of Hall sensors are required for providing a long moving distance (or a long stroke), the following description may be applied to the second camera actuator for performing this. In other words, a description will be given based on the sensor (or the Hall sensor) of the second position sensor unit 170 and the controller (or the driver DR).

Referring to FIG. 20, each of the second position sensor units 170 includes a plurality of sensors 210, an amplifier 220, and an analog-to-digital converter 230.

The plurality of sensors 210 include sensors for position detection. The plurality of sensors 210 may be a plurality of Hall sensors, and the Hall sensors may correspond to a Hall sensor described in the second camera actuator. Hereinafter, the Hall sensor may correspond to the above-described fourth and fifth Hall sensors. In other words, hereinafter, a description that the positions of the first and second lens assemblies or the first and second magnets are detected from the Hall sensors of the second camera actuator and the currents provided to the first and second coils are adjusted in response thereto will be given.

The plurality of Hall sensors may be positioned in at least one of the first sub-coil and the second sub-coil. For example, a plurality of Hall may be disposed in the first sub-coil. Alternatively, the plurality of Hall may be disposed in the second sub-coil. Alternatively, some of the plurality of Hall may be disposed in the first sub-coil, and the rest may be disposed in the second sub-coil. For example, three or more Hall sensors may be positioned in each of the first sub-coil or the second sub-coil in various combinations. Furthermore, the three or more Hall sensors may be applied to the second driving coil in the same manner. In other words, the three or more Hall sensors may be disposed in each of the third sub-coil and the fourth sub-coil in various numbers.

For example, one Hall sensor may be disposed in the first sub-coil, and two Hall sensors may be disposed in the second sub-coil. In addition, two Hall sensors may be disposed in the third sub-coil, and one Hall sensor may be disposed in the fourth sub-coil.

Furthermore, the plurality of Hall sensors (or the sensors) may be three or more and may be connected in parallel in units of two Hall sensors connected in series. A description thereof will be given below.

As a modified example, the plurality of sensors 210 may include a plurality of induction coils.

The plurality of sensors 210 have sensors for the same axis movement or axis tilt connected to each other in each actuator, and the sensors may also be connected to the amplifier (Amp) 220. A connecting structure of the plurality of sensors 210 will be described in more detail below.

In the present disclosure, the plurality of sensors 210 may be connected to each other, and an output terminal that is a terminal of at least one of the sensors may be connected to the amplifier 220. In the case of the plurality of sensors, the sensors 210 located at an outermost side may be connected to the amplifier 220. Therefore, a signal obtained by summing the detection signals detected by predetermined sensors may be input to the amplifier 220. The signal is expressed as the sum of the sensing range of the predetermined sensors, and thus the sensing range of the plurality of sensors 210 input to the amplifier 220 may be extended as compared to a single sensor.

The amplifier 220 may include a non-inverting terminal (+) and an inverting terminal (-). In addition, the amplifier 220 differentially amplifies the signal input to the non-inverting terminal (+) and the signal input to the inverting terminal (-) and outputs the differentially amplified signal to the analog-to-digital converter 230. In the specification, the analog-to-digital converter 230 is used interchangeably with "converter." In other words, the output signals of the plurality of sensors 210 have magnitudes in units of mV and V, which may be magnitudes that do not match an input range of the analog-to-digital converter 230. Therefore, the amplifier 220 differentially amplifies the signals input through the non-inverting terminal (+) and the inverting terminal (-) and outputs the differentially amplified signal in order to match the input range of the analog-to-digital converter 230.

The analog-to-digital converter 230 may receive an analog signal from the amplifier 220, convert the received analog signal into a digital signal, and output the digital signal. The analog-to-digital converter 230 may receive the analog signal from the amplifier 220 and output the analog signal as a multi-bit digital signal. At this time, the output signal of the analog-to-digital converter 230 may be expressed as values of 0 and 1.

At this time, the plurality of sensors 210 according to the embodiment of the present disclosure may be composed of a plurality of Hall sensors. Hereinafter, when the plurality of sensors 210 are composed of the Hall sensors, the interconnection relationship of each Hall sensor will be described.

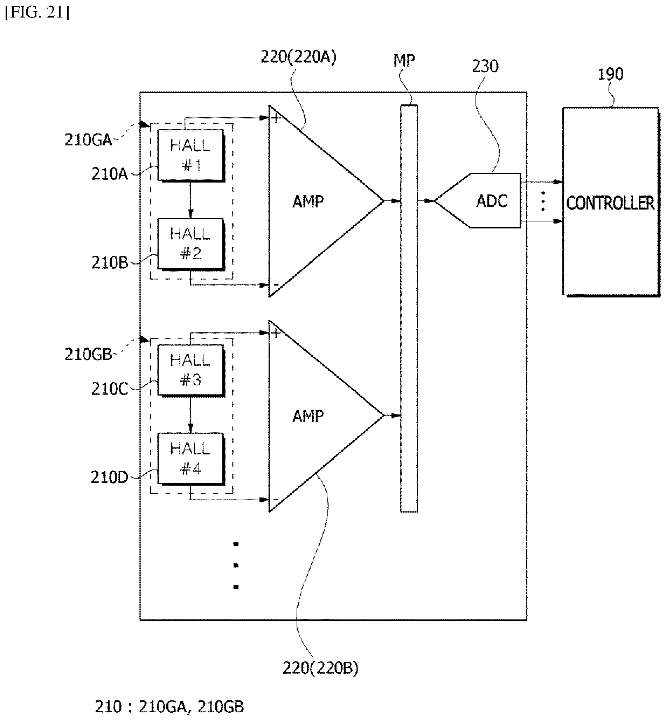

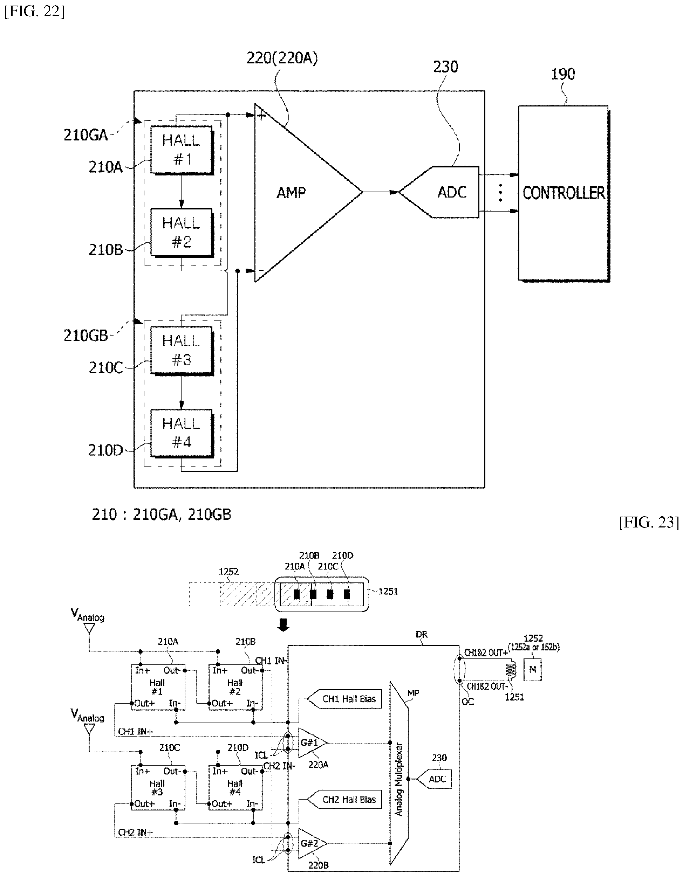

FIG. 21 is a view for describing a connection relationship of sensors according to an embodiment of the present disclosure, FIG. 22 is a view for describing a connection relationship of sensors according to another embodiment of the present disclosure, and FIG. 23 is a configuration diagram of a sensor, a driver, a driving coil, and a driving magnet according to an embodiment.

Referring to FIG. 21, the lens driving device according to the embodiment may include N sensors (or Hall sensors or sensors) for sensing a magnetic field of one (first magnet or second magnet) of the driving magnets. At this time, the driving unit (or driver) may receive outputs of a plurality of sensors (N sensors) and control currents applied to the first coil (or the second coil) from the plurality of sensors.

In the specification, N may be three or more (which is a natural number). In addition, in an embodiment, when N is an odd number, N sensors may be connected to have the serial connection of (N-1)/2 sensors. In addition, when N is an even number, N sensors may be connected to have the serial connection of N/2 sensors. In the specification, a description will be given based on a case in which N is 3 or 4. Furthermore, the sensor corresponds to the above-described Hall sensor or sensor unit.

As shown, a first sensor HALL#1 and a second sensor HALL#2 may be connected in series. In addition, a third sensor HALL#3 and a fourth sensor HALL#4 may be connected in series. The first sensor HALL#1 and the second sensor HALL#2 form a first sensor group 210GA. The first sensor group 210GA may be "first sensor group" or "first group hall sensor." In addition, the third sensor HALL#3 and the fourth sensor HALL#4 form a second sensor group 210GB. The second sensor group 210GB may be "second sensor group" or "second group Hall sensor."

The first sensor HALL#1 and the second sensor HALL#2 connected in series may be connected to a first amplifier 220A. In addition, the third sensor HALL#3 and the fourth sensor HALL#4 connected in series may be connected to a second amplifier 220B. In addition, signals amplified by each of the first amplifier 220A and the second amplifier 220B may be provided to a selector MP. For example, the selector MP may be a multiplexer. For example, the selector MP may provide signals output from the first sensor group and the second sensor group to the converter 230 through a charger (e.g., a capacitor). Each of the signals output from the first sensor group and the second sensor group may be converted into a digital signal through the converter 230. In addition, the controller 190 or the driver DR may receive the converted digital signal and detect the position of the driving magnet (e.g., the first magnet). Furthermore, the position of the lens unit (e.g., the first lens assembly or the second lens assembly) may be detected through the detected position of the driving magnet. The controller 190 may control the current applied to the driving coil according to the moving distance of the lens unit in response thereto.

Referring to FIG. 22, as described above, the lens driving device according to the embodiment may include N sensors (or Hall sensors or sensors) for sensing the magnetic field of one (first magnet or second magnet) of the driving magnets. At this time, the driving unit (or the driver) may receive the outputs of the plurality of sensors (N sensors) and control the current applied to the first coil (or the second coil) from the plurality of sensors. In addition, all of the above contents may be applied in the same manner except for the following description.

As shown, the first sensor HALL#1 and the second sensor HALL#2 may be connected in series. In addition, the third sensor HALL#3 and the fourth sensor HALL#4 may be connected in series. The first sensor HALL#1 and the second sensor HALL#2 form the first sensor group 210GA. The first sensor group 210GA may be "first sensor group" or "first group hall sensor." In addition, the third sensor HALL#3 and the fourth sensor HALL#4 form the second sensor group 210GB. The second sensor group 210GB may be "second sensor group" or "second group Hall sensor."

The first sensor HALL#1 and the second sensor HALL#2 connected in series may be connected to the amplifier 220. In addition, the third sensor HALL#3 and the fourth sensor HALL#4 connected in series may be connected to the amplifier 220. For example, the first sensor group 210GA and the second sensor group 210GB may be connected in parallel to the same amplifier. In other words, an integrated output value (e.g., sum or average) of the first sensor group 210GA and the second sensor group 210GB may be provided to the amplifier 220. In addition, the signal amplified by the amplifier may be provided to the selector or provided to the converter 230 when the selector is not present. In addition, signals output from the first sensor group and the second sensor group may be converted into digital signals through the converter 230. In addition, the controller 190 or the driver may receive the converted digital signal and detect the position of the driving magnet (e.g., the first magnet). Furthermore, the position of the lens unit (e.g., the first lens assembly or the second lens assembly) may be detected through the detected position of the driving magnet. The controller 190 may control the current applied to the driving coil according to the moving distance of the lens unit in response thereto.

Referring to FIG. 23, the N sensors described above in the camera actuator according to the embodiment correspond to the second Hall sensor unit 1253 for sensing the magnetic field of the second optical driving magnet 1252. In addition, the second Hall sensor unit 1253 may include a first sensor 210A to a fourth sensor 210D as a plurality of Hall sensors (or the position sensors). Furthermore, in the specification, the Hall sensor may be referred to as "sensor" or "position sensor." Each Hall sensor may include a first detection signal output terminal, a second detection signal output terminal, a first power terminal, and a second power terminal.

A voltage signal (or a current signal) may be applied to the Hall sensor through the first power terminal. In addition, a Hall bias signal may be applied from the driver DR (or the driving unit or the controller) through the second power terminal. The first detection signal output terminal and the second detection signal output terminal may correspond to polarities of an output signal for the magnetic force detected by the Hall sensor. For example, these may be different polarities.

In addition, the driving unit may include the controller including the driver DR. Therefore, the driving unit may receive the outputs of the first sensor 210A to the fourth sensor 210D and control the current applied to the first coil. Here, the received outputs of the first sensor 210A to the fourth sensor 210D may be digital signals output from or converted by the converter 230 and may be signals corresponding to the position of the first magnet that is the driving magnet.

Among the four sensors 210A to 210D, the first Hall sensor 210A and the second Hall sensor 210B may be connected in series. In addition, the third Hall sensor 210C and the fourth Hall sensor 210D may be connected in series.

Furthermore, N sensors, that is, four sensors may be sequentially disposed side by side in the optical axis direction. In addition, a first power terminal of the first Hall sensor 210A and a first power terminal of the second Hall sensor 210B may form the same node or may be connected in parallel and may receive an input voltage V_{Analog-.} In addition, a second power terminal of the first Hall sensor 210A and a second power terminal of the second Hall sensor 210B may form the same node or may be connected in parallel and may receive bias power CH1 Hall Bias. In the following description of the first and second Hall sensors, the above description may be applied to the first embodiment in FIG. 20 in the same manner.

In addition, a first power terminal of the third Hall sensor 210C and a first power terminal of the fourth Hall sensor 210D may form the same node or may be connected in parallel and may receive the input voltage V_{Analog-.} In addition, a second power terminal of the third Hall sensor 210C and a second power terminal of the fourth Hall sensor 210D may form the same node or may be connected in parallel and may receive bias power CH2 Hall Bias.

In addition, the first detection signal output terminal of the third Hall sensor 210C may be connected to an input channel of the driving unit or the driver DR. For example, the driving unit or the driver DR may include a first input channel IC1 and a second input channel IC2. Each of the first input channel IC1 and the second input channel IC2 may correspond to one terminal (one of a non-inverting terminal and an inverting terminal) of each amplifier. In addition, the third Hall sensor 210C and the fourth Hall sensor 210D may be connected to the second input channel IC2. In addition, the first and second Hall sensors 210A and 210B may be connected to the first input channel IC1.

For example, the first detection signal output terminal of the third Hall sensor 210C may be connected to one terminal (one of a non-inverting terminal or an inverting terminal) of the second amplifier 220B. In addition, the second detection signal output terminal of the fourth Hall sensor 210D may be connected to the other terminal (one of the non-inverting terminal and the inverting terminal) of the second amplifier 220B. In other words, a second input signal of the second input channel IC2 may be input to and amplified by the second amplifier 220B. The second input signal may be signals output from the first detection signal output terminal of the third Hall sensor 210C and the second detection signal output terminal of the fourth Hall sensor 210D.

Furthermore, the signals amplified by the first amplifier 220A and the second amplifier 220B may be switched or sampled by the selector MP and provided to the converter 230.

In addition, a first input signal or the second input signal selected by the selector (e.g., the multiplexer) may be provided to the converter 230. Therefore, each of the signals amplified by the first amplifier 220A and the second amplifier 220B may be converted into a digital signal.

Therefore, the controller or the driving unit may adjust the current applied to the driving magnet (e.g., the first coil) according to the first input signal or the second input signal converted by the converter 230. The controller may detect the position of the second optical driving magnet 1252 from the converted digital signal, detect the position of the driving magnet or the lens unit (or the lens assembly) to which the driving magnet is coupled and supply a current as much as the desired movement to the driving coil 1251. As described above, by using each amplifier, it is possible to improve the noise reduction effect of the signal. In addition, in the embodiment and in the following description, the plurality of sensors corresponding to one driving magnet may have Hall sensors, which are adjacent or not adjacent to each other, connected in series. For example, the connection between the adjacent Hall sensors can facilitate electrical design.

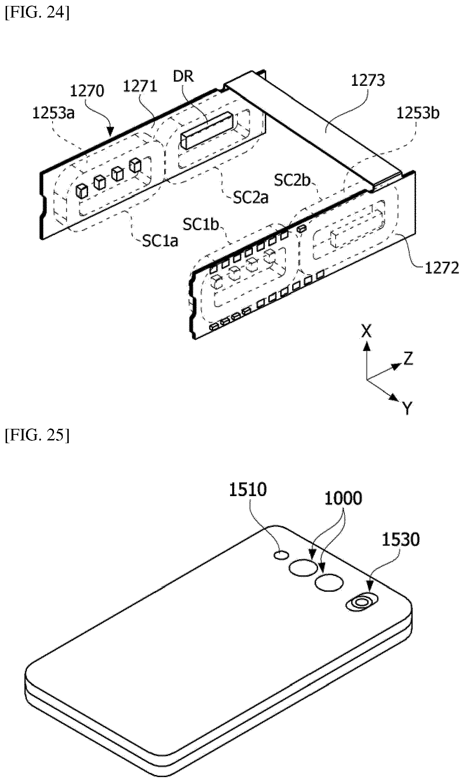

FIG. 24 is a perspective view showing a circuit connection according to an embodiment.

Referring to FIG. 24, the second board unit 1270 may include the second board 1271 disposed on the first side portion, the second board 1272 disposed on the second side portion, and the connecting board 1273 connecting the first board 1271 and the second board 1272.

The connecting board 1273 may be made of a flexible material. For example, the connecting board 1273 may be an RFPCB or an FPCB. In addition, the first board 1271 and the second board 1272 may be an RFPCB or an RPCB.

Furthermore, the driving unit or the driver DR may be mounted on one side of the first board 1271 and the second board 1272. In this case, in order to minimize a length of the fourth and fifth Hall sensors connected to the driver DR, the fourth Hall sensor and the fifth Hall sensor may be disposed to be misaligned in the second direction. Therefore, it is possible to minimize resistance due to the electrical connection between the devices.

FIG. 25 is a perspective view of a portable terminal to which the camera device according to the embodiment is applied.

Referring to FIG. 25, a portable terminal 1500 according to the embodiment may include a camera device 1000, a flash module 1530, and an AF device 1510, which are provided on a rear surface thereof.

The camera device 1000 may include an image capturing function and an AF function. For example, the camera device 1000 may include the AF function using an image.

The camera device 1000 processes an image frame of a still image or a moving image obtained by an image sensor in a capturing mode or a video call mode.

The processed image frame may be displayed on a predetermined display and stored in a memory. A camera (not shown) may also be disposed on a front surface of a body of the portable terminal.

For example, the camera device 1000 may include a first camera device 1000A and a second camera device 1000B, and the first camera device 1000A may implement an OIS function together with an AF or zooming function. In addition, the AF, zooming, and OIS functions may be performed by the second camera device 1000B. In this case, since the first camera device 1000A includes both of the first camera actuator and the second camera actuator, the camera device can be easily miniaturized by changing an optical path.

The flash module 1530 may include a light emitting device for emitting light therein. The flash module 1530 may be operated by a camera operation of the mobile terminal or the user's control.

The AF device 1510 may include one of a package of a surface light emitting laser device as a light emitting unit.

The AF device 1510 may include the AF function using a laser. The AF device 1510 may be mainly used in a condition that the AF function using the image of the camera device 1000 is degraded, for example, a proximity of 10 m or less or dark environment.

The AF device 1510 may include a light emitting unit including a vertical cavity surface emitting laser (VCSEL) semiconductor device and a light receiving unit for converting light energy into electrical energy, such as a photodiode.

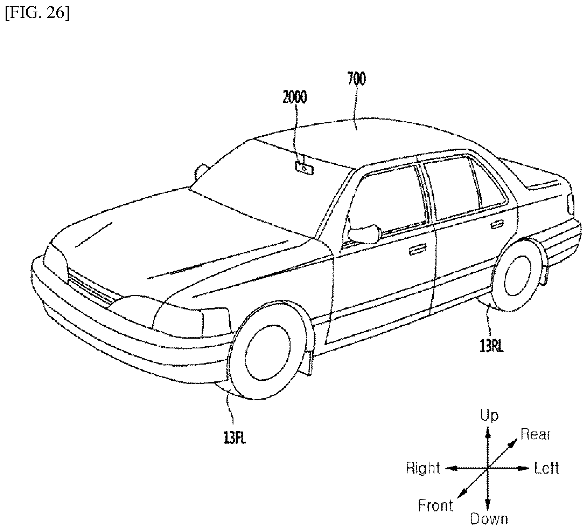

FIG. 26 is a perspective view of a vehicle to which the camera module according to the embodiment is applied.

For example, FIG. 26 is an external view of the vehicle including a vehicle driver assistance device to which the camera device 1000 according to the embodiment is applied.

Referring to FIG. 26, a vehicle 700 in the embodiment may include wheels 13FL and 13FR rotated by a power source and a predetermined sensor. The sensor may be a camera sensor 2000, but the present disclosure is not limited thereto.

The camera 2000 may be a camera sensor to which the camera device 1000 according to the embodiment is applied. The vehicle 700 in the embodiment may acquire image information through the camera sensor 2000 for capturing a front image or a surrounding image, determine a situation in which a lane line is not identified using the image information, and generate a virtual lane line when the lane line is not identified.

For example, the camera sensor 2000 may acquire a front image by capturing a view in front of the vehicle 700, and a processor (not shown) may acquire image information by analyzing an object included in the front image.

For example, when objects, such as a median, a curb, or a street tree corresponding to a lane line, an adjacent vehicle, a traveling obstacle, and an indirect road mark, are captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process still images or moving images obtained by the image sensor (e.g., a complementary metal-oxide semiconductor (CMOS) or a charge-coupled device (CCD)).

The image processing module may process the still images or moving images acquired through the image sensor to extract necessary information, and transmit the extracted information to the processor.

At this time, the camera sensor 2000 may include a stereo camera for improving the measurement accuracy of the object and further securing information such as a distance between the vehicle 700 and the object, but the present disclosure is not limited thereto.

Although embodiments have been mainly described above, these are only illustrative and do not limit the present disclosure, and those skilled in the art to which the present disclosure pertains will understand that various modifications and applications not exemplified above are possible without departing from the essential characteristics of the embodiments. For example, each component specifically shown in the embodiments may be implemented by modification. In addition, differences related to these modifications and applications should be construed as being included in the scope of the present disclosure defined in the appended claims.

## Claims

1. A camera device comprising:
a housing;
a first lens assembly moving in an optical axis direction with respect to the housing; and
a first driving unit configured to move the first lens assembly,
wherein the first driving unit includes a first driving coil and a first driving magnet facing the first driving coil,
the first driving coil includes a first sub-coil and a second sub-coil disposed to overlap each other in the optical axis direction, and
a maximum moving distance of the first lens assembly in the optical axis direction is greater than a length of a hollow of the first sub-coil in a short axis direction and smaller than or equal to a length of the hollow of the first sub-coil in the optical axis direction.

2. The camera device of claim 1, wherein a maximum length of the first sub-coil in the optical axis direction is greater than a length of the first driving magnet in the optical axis direction.

3. The camera device of claim 2, wherein the length of the first driving magnet in the optical axis direction is greater than the maximum moving distance of the first lens assembly.

4. The camera device of claim 1, wherein the first driving magnet is movable within a range from one side of the hollow of the first sub-coil to the other side of a hollow of the second sub-coil in the optical axis direction.

5. The camera device of claim 1, further comprising:
a second lens assembly configured to move in the optical axis direction; and
a second driving unit configured to move the second lens assembly,
wherein the second driving unit includes a second driving coil and a second driving magnet facing the second driving coil, and
the second driving coil includes a third sub-coil and a fourth sub-coil disposed to overlap each other in the optical axis direction.

6. The camera device of claim 5, further comprising an image sensor,
wherein the second lens assembly is disposed closer to the image sensor than the first lens assembly, and
a moving distance of the second lens assembly in the optical axis direction is greater than a moving distance of the first lens assembly in the optical axis direction.

7. The camera device of claim 1, wherein currents flow in the first sub-coil and the second sub-coil in difference directions.

8. The camera device of claim 1, further comprising a yoke disposed on a side surface of the first lens assembly,
wherein the yoke surrounds at least a portion of a side surface of the first driving magnet.

9. The camera device of claim 1, further comprising three or more Hall sensors disposed in at least one of the first sub-coil and the second sub-coil.

10. The camera device of claim 9, wherein the three or more Hall sensors include a unit of two Hall sensors connected in series, and
at least one unit of Hall sensors and another one Hall sensor are connected in parallel.

11. The camera device of claim 1, further comprising:
a plurality of first guide grooves positioned outside the first lens assembly; and
a plurality of balls disposed in one of the plurality of first guide grooves,
wherein the plurality of balls include balls having different diameters.

12. The camera device of claim 11, wherein, among the plurality of balls, a diameter of a ball positioned at an outer side is greater than a diameter of a ball positioned inside.

13. The camera device of claim 5, wherein a polarity of a face of the first driving magnet facing the first driving coil is the same as a polarity of the second driving magnet facing the second driving coil.

14. The camera device of claim 1, wherein any one of the hollow of the first sub-coil and a hollow of the second sub-coil has a lateral length in the optical axis direction greater than a length in a direction perpendicular to the optical axis direction.

15. The camera device of claim 1, wherein a length of the first driving magnet in the optical axis direction is greater than a length of any one of the hollow of the first sub-coil and a hollow of the second sub-coil in the optical axis direction.

16. The camera device of any one of claims 1 and 2, wherein the length of the first driving magnet in the optical axis direction is smaller than a distance from one side of the hollow of the first sub-coil to the other side of a hollow of the second sub-coil.

17. The camera device of claim 16, wherein the length of the first driving magnet in the optical axis direction is smaller than a distance from the one side of the hollow of the first sub-coil to one side of the hollow of the second sub-coil.

18. The camera device of claim 17, wherein the length of the first driving magnet in the optical axis direction is smaller than a distance from the other side of the hollow of the first sub-coil to the other side of the hollow of the second sub-coil.

19. A camera device comprising:
a housing;
a lens assembly configured to move in an optical axis direction with respect to the housing;
a first driving magnet disposed in the lens assembly; and
a first driving coil facing the first driving magnet,
wherein the first driving coil includes a first sub-coil and a second sub-coil disposed to overlap each other in the optical axis direction, and
current directions of a first region of the first sub-coil overlapping the first driving magnet in a direction perpendicular to the optical axis direction and disposed perpendicular to the optical axis direction and a second region of the second sub-coil are the same.

20. A camera device comprising:
a fixed unit including a first sub-coil and a second sub-coil disposed to overlap each other in an optical axis direction; and
a moving unit including a first driving magnet and configured to move in the optical axis direction,
wherein a moving distance of the moving unit in the optical axis direction is greater than a length of a hollow of the first sub-coil in a short axis direction and smaller than or equal to a length of the hollow of the first sub-coil in a long axis direction,
current directions of a first region of the first sub-coil overlapping the first driving magnet in a direction perpendicular to the optical axis direction and disposed in the short axis direction and a second region of the second sub-coil are the same, and
a maximum length of the first driving magnet in the optical axis direction is smaller than a maximum length of the first sub-coil.
